(19) Europäisches Patentamt / European Patent Office / Office européen des brevets

(11) **EP 4 723 275 A1**

(12) **EUROPEAN PATENT APPLICATION**
published in accordance with Art. 153(4) EPC

(43) Date of publication:
08.04.2026 Bulletin 2026/15

(21) Application number: 24941387.3

(22) Date of filing: 30.09.2024

(51) International Patent Classification (IPC):
$H01M\ 10/0562^{(2010.01)}$  $H01M\ 10/058^{(2010.01)}$
$H01M\ 10/0525^{(2010.01)}$

(52) Cooperative Patent Classification (CPC):
Y02E 60/10

(86) International application number:
PCT/CN2024/122769

(87) International publication number:
WO 2025/246111 (04.12.2025 Gazette 2025/49)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 31.05.2024 CN 202410704153
31.07.2024 CN 202411046831

(71) Applicant: **Beijing Easpring Material Technology Co., Ltd.**
**Beijing 100160 (CN)**

(72) Inventors:
• YU, Tianwei
**Beijing 100160 (CN)**
• LIU, Yafei
**Beijing 100160 (CN)**
• CHEN, Yanbin
**Beijing 100160 (CN)**

(74) Representative: **Lavoix**
**Bayerstraße 83**
**80335 München (DE)**

(54) **NASICON-TYPE SOLID-STATE ELECTROLYTE, PREPARATION METHOD THEREFOR, AND USE THEREOF**

(57) Provided are a NASICON-type solid-state electrolyte, a preparation method therefor, and a use thereof. The NASICON-type solid-state electrolyte comprises: $Li_xM1_yM2_zM3_uM4_v(PO_4)_{w1}(PS_4)_{w2}$, where $y+z+u+v=2$, $w1+w2=3$, $0<x<5$, $0\leq y\leq0.5$, $0\leq z\leq1$, $0<u<2$, $0\leq v\leq3$, $1\leq w1\leq3$, M1 comprises at least one of Mg, Na, K, and Zn, M2 comprises at least one of Al, Ga, In, Y, Sc, La, and Ce, M3 comprises at least one of Ti, Zr, Hf, and Ge, and M4 comprises at least one of Cr, Mo, Ca, Fe, Si, W, Nb, Sm, V, and B.

```
                                                              ┌─ S100
┌──────────────────────────────────────────────────┐
│ Mixing and sintering a lithium-containing compound,│
│ an M1-containing compound, an M2-containing        │
│ compound, an M3-containing compound, an            │
│ M4-containing compound, and a phosphorus-          │
│ containing compound                                │
└──────────────────────────────────────────────────┘
                        │
                        ▼
                                                              ┌─ S200
┌──────────────────────────────────────────────────┐
│ Dispersing the solid-state electrolyte in a second │
│ solvent and grinding the solid-state electrolyte to│
│ obtain a nanoscale slurry, adding a sulfide to the │
│ nanoscale slurry, and performing mixing and drying │
└──────────────────────────────────────────────────┘
```

FIG. 1

## Description

### FIELD

The present disclosure relates to the field of battery technologies, and more particularly, to a NASICON-type solid-state electrolyte, and a preparation method and application thereof.

### BACKGROUND

Liquid lithium-ion batteries have been a dominant energy storage technology since their initial commercialization in 1991, but the liquid lithium-ion batteries are now approaching their energy density limits and pose certain safety risks. Solid-state batteries (SSBs), which replace organic flammable liquid electrolytes (LEs) with solid-state electrolytes (SEs), can fundamentally solve safety issues and are expected to improve key performance indicators of a battery.

The solid-state battery mainly includes a solid-state electrolyte, a cathode plate, and an anode plate. The most promising anode active materials for achieving high energy density are lithium metal and silicon. Based on a roadmap, the lithium metal has the highest technological potential as an anode active material, followed by silicon, but silicon has higher market application potential than the lithium metal. Although alloy anodes such as Li-In and Li-Al exhibit favorable compatibility with solid-state electrolyte materials in laboratory studies, but are not discussed in the roadmap. For cathode active materials (CAMs), the roadmap points out that traditional layered oxide materials (such as lithium nickel manganese cobalt oxide (NMC), lithium nickel cobalt aluminum oxide (NCA), and lithium cobalt oxide (LCO)) have the highest technological potential for application in SSBs, followed by medium-priced and medium-performance materials such as lithium ferrous phosphate (LFP) or high-voltage materials such as $Li(Mn, Ni)_2O_4$(LMNO). Due to a low cost and high safety of the LFP, market application potential of the LFP is comparable to that of the layered oxide materials.

For the solid-state electrolyte materials, gamet-type SEs are the most promising class of oxide SEs due to their wide electrochemical stability window. For sulfide SEs, argyrodite-type electrolytes, represented by $Li_6PS_5Cl$, are the most promising due to their high ionic conductivity and high kinetic stability against the lithium metal. To date, no single SE has met all requirements of high-energy-density SSBs, and solid-state electrolytes still face many challenges. For both oxide solid-state electrolytes and sulfide solid-state electrolytes, processability and (electro)chemical compatibility are their main challenges, respectively. In addition to issues inherent to the solid-state electrolyte per se (such as interface stability and ionic conductivity), most problems occur at interfaces between different components. At a CAM/SEs interface, poor contact and interface side reactions during cycling are two major problems.

Therefore, existing solid-state batteries need to be improved.

### SUMMARY

The present disclosure aims to solve, at least to some extent, at least one of the technical problems in the related art. To this end, an objective of the present disclosure is to provide a NASICON-type solid-state electrolyte, and a preparation method and application thereof. The NASICON-type solid-state electrolyte exhibits excellent interface stability and ionic conductivity. Thus, by coating the NASICON-type solid-state electrolyte on a cathode active material matrix and thus applying the NASICON-type solid-state electrolyte to a solid-state battery, a space charge layer between the cathode active material matrix and a solid-state electrolyte layer can be reduced, interface side reactions can be reduced, and impedance of the solid-state battery can be lowered, thereby improving capacity, cycle performance, and rate capability of the solid-state battery.

In a first aspect of the present disclosure, the present disclosure provides a NASICON-type solid-state electrolyte. According to an embodiment of the present disclosure, the NASICON-type solid-state electrolyte includes $Li_xM1_yM2_zM3_uM4_v(PO_4)_{w1}(PS_4)_{w2}$, where: $y+z+u+v=2$, $w1+w2=3$, $0<x<5$, $0\leq y\leq0.5$, $0<z\leq1$, $0<u<2$, $0\leq v\leq3$, $1\leq w1\leq3$, and $0.0001\leq w2\leq0.3$; M1 includes at least one of Mg, Na, K, or Zn; M2 includes at least one of Al, Ga, In, Y, Sc, La, or Ce; M3 includes at least one of Ti, Zr, Hf, or Ge; and M4 includes at least one of Cr, Mo, Ca, Fe, Si, W, Nb, Sm, V, or B.

According to the NASICON-type solid-state electrolyte of the embodiment of the present disclosure, main elements of the NASICON-type solid-state electrolyte include Li, M1, M2, M3, and M4 (M1 includes at least one of Mg, Na, K, or Zn; M2 includes at least one of Al, Ga, In, Y, Sc, La, or Ce; M3 includes at least one of Ti, Zr, Hf, or Ge; and M4 includes at least one of Cr, Mo, Ca, Fe, Si, W, Nb, Sm, V, or B), which can improve ionic conductivity of the solid-state electrolyte. Meanwhile, introduction of element S can enhance interface stability of the solid-state electrolyte. In this way, the NASICON-type solid-state electrolyte exhibits the excellent interface stability and ionic conductivity. Thus, by coating the NASICON-type solid-state electrolyte on the cathode active material matrix and thus applying the NASICON-type solid-state electrolyte to the solid-state battery, the space charge layer between the cathode active material matrix and the solid-state electrolyte layer can be reduced, the interface side reactions can be reduced, and the impedance of the solid-state battery can be lowered, thereby improving the capacity, the cycle performance, and the rate capability of the solid-state battery.

In addition, the NASICON-type solid-state electrolyte according to the above-described embodiments of the present disclosure may further have the following additional technical features.

In some embodiments of the present disclosure, the NASICON-type solid-state electrolyte satisfies at least one of the following conditions: $0.6 \leq x \leq 3.2$, and preferably, $1 \leq x \leq 2$; $0 \leq y \leq 0.3$, and preferably, $0 \leq y \leq 0.1$; $0.2 \leq z \leq 0.7$, and preferably, $0.2 \leq z \leq 0.4$; $0.9 \leq u < 2$, and preferably, $1.4 \leq u < 2$; or $0.2 \leq v \leq 2$, and preferably, $0.5 \leq v \leq 1$.

Thus, the interface stability and the ionic conductivity of the NASICON-type solid-state electrolyte can be further improved.

In some embodiments of the present disclosure, an XRD pattern of the NASICON-type solid-state electrolyte has a (113) characteristic peak, a (104) characteristic peak, a (024) characteristic peak, and a (012) characteristic peak. A peak position of the (113) characteristic peak ranges from 24.49° to 26°, with a full width at half maximum ranging from 0.165° to 0.3°. A peak position of the (104) characteristic peak ranges from 20.85° to 22°, with a full width at half maximum ranging from 0.16° to 0.3°. A peak position of the (024) characteristic peak ranges from 29.64° to 31°, with a full width at half maximum ranging from 0.18° to 0.3°. A peak position of the (012) characteristic peak ranges from 14.68° to 16°, with a full width at half maximum ranging from 0.165° to 0.3°. The NASICON-type solid-state electrolyte has a grain size ranging from 100 Å to 10000 Å, a lattice distortion rate ranging from 0.05% to 0.5%, and a degree of crystallinity ranging from 95.0% to 99.5%. A lattice constant a ranges from 8.300 Å to 8.500 Å; a lattice constant b ranges from 8.300 Å to 8.500 Å; a lattice constant c ranges from 20.805 Å to 20.900 Å; a lattice constant $\alpha$ ranges from 90.005° to 91.05°; a lattice constant $\beta$ ranges from 90.005° to 91.05°; and a lattice constant $\gamma$ ranges from 120.005° to 120.050°.

Thus, the solid-state electrolyte in the present disclosure is the NASICON-type solid-state electrolyte, and thus has the excellent ionic conductivity and interface stability.

In some embodiments of the present disclosure, the NASICON-type solid-state electrolyte satisfies at least one of the following conditions: a volume average particle size $Dv_{50}$ ranges from 0.01 μm to 0.2 μm, and preferably, from 0.05 μm to 0.1 μm; a specific surface area ranges from 30 m²/g to 300 m²/g; a pH value ranges from 7.2 to 9; an ionic conductivity ranges from $4.0 \times 10^{-4}$ S/cm to $1.0 \times 10^{-2}$ S/cm; or an electronic conductivity ranges from $1.0 \times 10^{-10}$ S/cm to $1.0 \times 10^{-8}$ S/cm.

Thus, the ionic conductivity and the interface stability of the NASICON-type solid-state electrolyte can be further improved.

According to an embodiment of the present disclosure, the NASICON-type solid-state electrolyte includes $Li_xM1_yM2_zM3_uM4_v(PO_4)_{w1}(PS_4)_{w2}$, where: $y+z+u+v=2$, $w1+w2=3$, $0<x<2$, $0 \leq y \leq 0.5$, $0<z \leq 1$, $0<u<2$, $0 \leq v \leq 3$, $1 \leq w1 \leq 3$, and $0.0001 \leq w2 \leq 0.3$; M1 includes at least one of Mg, Na, K, or Zn; M2 includes at least one of Al, Ga, In, Y, Sc, La, or Ce; M3 includes at least one of Ti, Zr, Hf, or Ge; and M4 includes at least one of Cr, Mo, Ca, Fe, Si, W, Nb, Sm, V, or B.

In some embodiments of the present disclosure, an XRD pattern of the NASICON-type solid-state electrolyte has a (113) characteristic peak, a (104) characteristic peak, a (024) characteristic peak, and a (012) characteristic peak. A peak position of the (113) characteristic peak ranges from 24.490° to 24.880°, with a full width at half maximum ranging from 0.195° to 0.290°. A peak position of the (104) characteristic peak ranges from 20.850° to 21.110°, with a full width at half maximum ranging from 0.200° to 0.300°. A peak position of the (024) characteristic peak ranges from 29.640° to 30.010°, with a full width at half maximum ranging from 0.180° to 0.320°. A peak position of the (012) characteristic peak ranges from 14.680° to 15.990°, with a full width at half maximum ranging from 0.165° to 0.315°. Thus, the solid-state electrolyte in the present disclosure is the NASICON-type solid-state electrolyte, and thus has the excellent interface stability and ionic conductivity.

In some embodiments of the present disclosure, the NASICON-type solid-state electrolyte satisfies at least one of the following conditions: a volume average particle size $Dv_{50}$ ranges from 0.01 μm to 0.2 μm, and preferably, from 0.05 μm to 0.1 μm; a pH value ranges from 7.2 to 9; an ionic conductivity ranges from $1.0 \times 10^{-4}$ S/cm to $1.5 \times 10^{-3}$ S/cm; or an electronic conductivity ranges from $1.0 \times 10^{-10}$ S/cm to $1.0 \times 10^{-8}$ S/cm.

Thus, the ionic conductivity and the interface stability of the NASICON-type solid-state electrolyte can be further improved.

In a second aspect of the present disclosure, the present disclosure provides a method for preparing the NASICON-type solid-state electrolyte. According to an embodiment of the present disclosure, the method includes: step 1: mixing and sintering a lithium-containing compound, an M1-containing compound, an M2-containing compound, an M3-containing compound, an M4-containing compound, and a phosphorus-containing compound to obtain a solid-state electrolyte; and step 2: dispersing the solid-state electrolyte in a second solvent and performing grinding to obtain a nanoscale slurry, adding a sulfide to the nanoscale slurry, and performing mixing and drying, to obtain the NASICON-type solid-state electrolyte.

Thus, the above-described NASICON-type solid-state electrolyte with the excellent interface stability and ionic conductivity can be prepared by adopting this method. In this way, by coating the NASICON-type solid-state electrolyte on the cathode active material matrix, the impedance of the solid-state battery can be lowered, and the capacity, the cycle performance, and the rate capability of the solid-state battery can be improved.

In addition, the NASICON-type solid-state electrolyte prepared according to the above-described embodiments of the present disclosure may also have the following additional technical features.

In some embodiments of the present disclosure, step 1 includes: step 1-1: mixing the lithium-containing compound, the M1-containing compound, the M2-containing compound, the M3-containing compound, the M4-containing compound, the phosphorus-containing compound, an organic monomer, a first solvent, an initiator, and a catalyst, to obtain a mixture; step 1-2: heating the mixture to initiate a polymerization reaction, to obtain a bulk solid-state electrolyte precursor; step 1-3: pre-sintering the bulk solid-state electrolyte precursor, followed by crushing, to obtain a powdery solid-state electrolyte precursor; and step 1-4: sintering the powdery solid-state electrolyte precursor, followed by crushing, to obtain the solid-state electrolyte.

In some embodiments of the present disclosure, step 1-1 satisfies at least one of the following conditions: the organic monomer includes at least one of acrylamide, methylene bisacrylamide, styrene, butadiene, or methyl methacrylate; the first solvent includes at least one of water, N-methyl-2-pyrrolidone, phthalate, diester, long-chain alcohol, or pyrrolidone; the initiator includes at least one of benzoyl peroxide, $(NH_4)_2S_2O_8$, or $K_2S_2O_8$; and the catalyst includes at least one of N,N,N'N'-tetramethylethylenediamine, N,N,N',N'-tetramethyl-1,6-hexanediamine, N,N-diisopropylethylamine, or N-(3-aminopropyl)-N-dodecyl-1,3-propylenediamine.

In some embodiments of the present disclosure, in step 1-2, the polymerization reaction is performed at a temperature ranging from 80°C to 200°C, and preferably, from 90°C to 150°C, and more preferably, from 96°C to 120°C.

In some embodiments of the present disclosure, in step 1-3: the pre-sintering is performed at a temperature ranging from 300°C to 600°C, and preferably, from 350°C to 575°C, and more preferably, from 380°C to 560°C; and/or the pre-sintering lasts for 2 hours to 6 hours, and preferably, 2 hours to 5 hours, and more preferably, 2 hours to 4 hours.

In some embodiments of the present disclosure, in step 1-4: the sintering is performed at a temperature ranging from 650°C to 900°C, and preferably, from 700°C to 875°C, and more preferably, from 730°C to 860°C; and/or the sintering lasts for 4 hours to 10 hours, and preferably, 5 hours to 9 hours, and more preferably, 6 hours to 8 hours.

In some embodiments of the present disclosure, in step 2: a volume average particle size Dv50 of the slurry ranges from 5 nm to 500 nm, and preferably, from 10 nm to 200 nm, and more preferably, from 50 nm to 100 nm; and/or the second solvent includes at least one of n-heptane, toluene, or dimethyl ether.

In some embodiments of the present disclosure, in step 2, an addition amount of the sulfide is 0.1 wt% to 3 wt% of the solid-state electrolyte, and preferably, 0.1 wt% to 1 wt%.

In some embodiments of the present disclosure, in step 2, the drying is performed at a temperature ranging from 120°C to 600°C, and preferably, from 150°C to 500°C.

In a third aspect of the present disclosure, the present disclosure provides a cathode active material. According to an embodiment of the present disclosure, the cathode active material includes: a cathode active material matrix; and a coating layer formed on at least a portion of a surface of the cathode active material matrix. The coating layer includes the NASICON-type solid-state electrolyte according to the first aspect of the present disclosure or the NASICON-type solid-state electrolyte obtained by the method according to the second aspect of the present disclosure.

According to the cathode active material of the embodiments of the present disclosure, by forming the coating layer including the NASICON-type solid-state electrolyte on the surface of the cathode active material matrix and thus applying the NASICON-type solid-state electrolyte to the solid-state battery, the space charge layer between the cathode active material matrix and the solid-state electrolyte layer can be reduced, the interface side reactions can be reduced, and the impedance of the solid-state battery can be lowered, thereby improving the capacity, the cycle performance, and the rate capability of the solid-state battery.

In addition, the cathode active material according to the above-described embodiments of the present disclosure may further have the following additional technical features.

In some embodiments of the present disclosure, based on a total amount of the cathode active material matrix, a mass fraction of the NASICON-type solid-state electrolyte ranges from 0.05% to 1%, and preferably, from 0.3% to 0.9%, and more preferably, from 0.4% to 0.8%. Thus, interface stability and ionic conductivity of the cathode active material can be further improved.

In some embodiments of the present disclosure, the cathode active material matrix includes at least one of lithium nickel oxide, lithium cobalt oxide, lithium manganese oxide, lithium nickel manganese oxide, lithium nickel cobalt manganese oxide, lithium nickel cobalt aluminum oxide, lithium nickel cobalt manganese aluminum oxide, lithium-rich manganese-based layered oxide and derivative thereof, lithium ferrous phosphate, or lithium manganese iron phosphate.

In some embodiments of the present disclosure, in acid-base titration treatment, the cathode active material exhibits a phosphate characteristic titration peak at a pH value ranging from 5 to 8.

In a fourth aspect of the present disclosure, the present disclosure provides a method for preparing the above-described cathode active material. According to an embodiment of the present disclosure, the method includes: mixing the cathode active material matrix with the NASICON-type solid-state electrolyte; and performing heat treatment, to form the coating layer including the NASICON-type solid-state electrolyte on at least a portion of the surface of the cathode active material matrix.

The NASICON-type solid-state electrolyte includes the NASICON-type solid-state electrolyte according to the first aspect of the present disclosure or the NASICON-type solid-state electrolyte obtained by the method according to the second aspect of the present disclosure.

Thus, the above-described cathode active material with high interface stability and ionic conductivity can be prepared by adopting this method. By applying the cathode active material to the solid-state battery, the space charge layer between the cathode active material matrix and the solid-state electrolyte layer can be reduced, the interface side reactions can be reduced, and the impedance of the solid-state battery can be lowered, thereby improving the capacity, the cycle performance, and the rate capability of the solid-state battery.

In some embodiments of the present disclosure, the heat treatment is performed at a temperature ranging from 300°C to 700°C, and preferably, from 375°C to 625°C, and more preferably, from 420°C to 580°C; and/or the heat treatment lasts for 2 hours to 10 hours, and preferably, 4 hours to 10 hours, and more preferably, 5 hours to 10 hours.

In a fifth aspect of the present disclosure, the present disclosure provides a cathode plate including the cathode active material according to the third aspect of the present disclosure or the cathode active material obtained by the method according to the fourth aspect of the present disclosure.

In a sixth aspect of the present disclosure, the present disclosure provides a solid-state battery including the cathode plate according the fifth aspect of the present disclosure. Thus, the solid-state battery has high capacity, cycle performance, and rate capability.

In a seventh aspect of the present disclosure, the present disclosure provides an electrical device including the solid-state battery according to the sixth aspect of the present disclosure.

Additional aspects and advantages of the present disclosure will be provided at least in part in the following description, or will become apparent at least in part from the following description, or can be learned from practicing of the present disclosure.

**BRIEF DESCRIPTION OF THE DRAWINGS**

The above and/or additional aspects and advantages of the present disclosure will become more apparent and more understandable from the following description of embodiments taken in conjunction with the accompanying drawings.

FIG. 1 is a schematic flowchart of a method for preparing a NASICON-type solid-state electrolyte according to an embodiment of the present disclosure.

FIG. 2 is a schematic structural view of a cathode active material according to an embodiment of the present disclosure.

FIG. 3 is a Mapping image of a NASICON-type solid-state electrolyte phase prepared in Example 1 under an EDS test.

FIG. 4 is an XRD pattern of Example 1 and Comparative Example 1.

FIG. 5 is an XRD pattern of Example 1 and Comparative Example 1.

FIG. 6 illustrates first charge-discharge curves of batteries in Example 1 and Comparative Example 1.

FIG. 7 is a Mapping image of a cathode active material in Example 3 under an EDS test.

**DETAILED DESCRIPTION OF THE EMBODIMENTS**

Embodiments of the present disclosure will be described in detail below. The examples of embodiments are as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

Endpoints and any values of the ranges disclosed in the present disclosure are not limited to the precise ranges or values. These ranges or values should be understood to include values close to these ranges or values. For numerical ranges, the endpoint values of each range, the endpoint values of each range and individual point values, and the individual point values can be combined with each other to obtain one or more new numerical ranges, which should be considered as specifically disclosed in the present disclosure.

In a first aspect of the present disclosure, the present disclosure provides a NASICON-type solid-state electrolyte. According to an embodiment of the present disclosure, the NASICON-type solid-state electrolyte includes $Li_xM1_yM2_zM3_uM4_v(PO_4)_{w1}(PS_4)_{w2}$, where: $y+z+u+v=2$, $w1+w2=3$, $0<x<5$, $0\leq y\leq0.5$, $0<z\leq1$, $0<u<2$, $0\leq v\leq3$, $1\leq w1\leq3$, and $0.0001\leq w2\leq0.3$; M1 includes at least one of Mg, Na, K, or Zn; M2 includes at least one of Al, Ga, In, Y, Sc, La, or Ce; M3 includes at least one of Ti, Zr, Hf, or Ge; and M4 includes at least one of Cr, Mo, Ca, Fe, Si, W, Nb, Sm, V, or B.

According to the NASICON-type solid-state electrolyte of the embodiments of the present disclosure, by introducing element S, reactive free cations on a material surface are reduced and a dispersed inert phase precipitates on the surface, which enables the NASICON-type solid-state electrolyte to withstand further corrosion in a strong reduction

environment of $S^{2-}$. When subsequently applied in a sulfide-based all-solid-state battery system, interface stability of the solid-state electrolyte can be improved. Main elements include Li, M1, M2, M3, and M4 (M1 includes at least one of Mg, Na, K, or Zn; M2 includes at least one of Al, Ga, In, Y, Sc, La, or Ce; M3 includes at least one of Ti, Zr, Hf, or Ge; and M4 includes at least one of Cr, Mo, Ca, Fe, Si, W, Nb, Sm, V, or B), which can improve ionic conductivity of the solid-state electrolyte. In this way, the NASICON-type solid-state electrolyte exhibits excellent interface stability and ionic conductivity. Thus, by coating the NASICON-type solid-state electrolyte on a cathode active material matrix and thus applying the NASICON-type solid-state electrolyte to a solid-state battery, a space charge layer between the cathode active material matrix and a solid-state electrolyte layer can be reduced, interface side reactions can be reduced, and impedance of the solid-state battery can be lowered, thereby improving the capacity, cycle performance, and rate capability of the solid-state battery.

According to an embodiment of the present disclosure, in the $Li_xM1_yM2_zM3_uM4_v(PO_4)_{w1}(PS_4)_{w2}$, $0<x<5$, for example, $0.001 \leq x \leq 4.999$, $0.005 \leq x \leq 4.9$, $0.01 \leq x \leq 4.9$, $0.05 \leq x \leq 4.9$, $0.1 \leq x \leq 4.9$, $0.5 \leq x \leq 4.5$, $0.7 \leq x \leq 4.2$, $1 \leq x \leq 4$, $1.5 \leq x \leq 3.5$, $1.7 \leq x \leq 3.2$, $2 \leq x \leq 3$, $2.2 \leq x \leq 2.8$, $2.5 \leq x \leq 2.8$ etc. According to a specific embodiment of the present disclosure, in the $Li_xM1_yM2_zM3_uM4_v(PO_4)_{w1}(PS_4)_{w2}$, $0.6 \leq x \leq 3.2$. Further, $1 \leq x \leq 2$.

According to an embodiment of the present disclosure, in the $Li_xM1_yM2_zM3_uM4_v(PO_4)_{w1}(PS_4)_{w2}$, $0 \leq y \leq 0.5$, for example, $0.001 \leq y \leq 0.49$, $0.005 \leq y \leq 0.49$, $0.01 \leq y \leq 0.49$, $0.05 \leq y \leq 0.49$, $0.1 \leq y \leq 0.49$, $0.15 \leq y \leq 0.49$, $0.18 \leq y \leq 0.45$, $0.2 \leq y \leq 0.42$, $0.22 \leq y \leq 0.4$, $0.25 \leq y \leq 0.38$, $0.28 \leq y \leq 0.35$, $0.3 \leq y \leq 0.32$, etc. According to a specific embodiment of the present disclosure, in the $Li_xM1_yM2_zM3_uM4_v(PO_4)_{w1}(PS_4)_{w2}$, $0 \leq y \leq 0.3$. Further, $0 \leq y \leq 0.1$.

According to an embodiment of the present disclosure, in the $Li_xM1_yM2_zM3_uM4_v(PO_4)_{w1}(PS_4)_{w2}$, $0<z\leq1$, for example, $0.001 \leq z \leq 1$, $0.005 \leq z \leq 1$, $0.01 \leq z \leq 1$, $0.05 \leq z \leq 1$, $0.1 \leq z \leq 1$, $0.1 \leq z \leq 0.9$, $0.2 \leq z \leq 0.8$, $0.3 \leq z \leq 0.7$, $0.4 \leq z \leq 0.6$, $0.5 \leq z \leq 0.6$, etc. According to a specific embodiment of the present disclosure, in the $Li_xM1_yM2_zM3_uM4_v(PO_4)_{w1}(PS_4)_{w2}$, $0.2 \leq z \leq 0.7$. Further, $0.2 \leq z \leq 0.4$

According to an embodiment of the present disclosure, in the $Li_xM1_yM2_zM3_uM4_v(PO_4)_{w1}(PS_4)_{w2}$, $0<u<2$, for example, $0.001 \leq u \leq 1.9$, $0.005 \leq u \leq 1.9$, $0.01 \leq u \leq 1.9$, $0.05 \leq u \leq 1.9$, $0.07 \leq u \leq 1.9$, $0.1 \leq u \leq 1.9$, $0.3 \leq u \leq 1.7$, $0.5 \leq u \leq 1.5$, $0.7 \leq u \leq 1.2$, $1 \leq u \leq 1.2$, etc. According to a specific embodiment of the present disclosure, in the $Li_xM1_yM2_zM3_uM4_v(PO_4)_{w1}(PS_4)_{w2}$, $0.9 \leq u<2$. Further, $1.4 \leq u<2$.

According to an embodiment of the present disclosure, in the $Li_xM1_yM2_zM3_uM4_v(PO_4)_{w1}(PS_4)_{w2}$, $0 \leq v \leq 3$, for example, $0.001 \leq v \leq 3$, $0.005 \leq v \leq 3$, $0.01 \leq v \leq 3$, $0.05 \leq v \leq 3$, $0.1 \leq v \leq 3$, $0.5 \leq v \leq 3$, $0.7 \leq v \leq 3$, $1 \leq v \leq 3$, $1.2 \leq v \leq 2.8$, $1.5 \leq v \leq 2.5$, $1.7 \leq v \leq 2.2$, $1.7 \leq v \leq 2$, etc. According to a specific embodiment of the present disclosure, in the $Li_xM1_yM2_zM3_uM4_v(PO_4)_{w1}(PS_4)_{w2}$, $0.2 \leq v \leq 2$. Further, $0.5 \leq v \leq 1$.

According to an embodiment of the present disclosure, in the $Li_xM1_yM2_zM3_uM4_v(PO_4)_{w1}(PS_4)_{w2}$, $1 \leq w1 \leq 3$, for example, $1.2 \leq w1 \leq 2.7$, $1.5 \leq w1 \leq 2.5$, $1.7 \leq w1 \leq 2.3$, $2 \leq w1 \leq 2.1$, etc.

According to an embodiment of the present disclosure, in the $Li_xM1_yM2_zM3_uM4_v(PO_4)_{w1}(PS_4)_{w2}$, $0.0001 \leq w2 \leq 0.3$, for example $0.0005 \leq w2 \leq 0.3$, $0.001 \leq w2 \leq 0.3$, $0.005 \leq w2 \leq 0.3$, $0.01 \leq w2 \leq 0.3$, $0.05 \leq w2 \leq 0.3$, $0.07 \leq w2 \leq 0.3$, $0.1 \leq w2 \leq 0.3$, $0.15 \leq w2 \leq 0.25$, $0.17 \leq w2 \leq 0.22$, $0.17 \leq w2 \leq 0.2$, etc.

In the present disclosure, element composition of the NASICON-type solid-state electrolyte can be determined by using instruments and methods known in the art. For example, inductively coupled plasma optical emission spectrometry can be employed, with reference to the instrument standard EPA6010D-2014 *Inductively Coupled Plasma Atomic Emission Spectrometry*. The sample is chemically treated and digested into a solution, then nebulized into plasma where elements are excited to emit their characteristic spectral lines. Based on a wavelength of the spectral line and an intensity (proportional to concentration), qualitative and quantitative analysis of an element content is performed.

According to an embodiment of the present disclosure, an XRD pattern of the NASICON-type solid-state electrolyte has a (113) characteristic peak, a (104) characteristic peak, a (024) characteristic peak, and a (012) characteristic peak. A peak position of the (113) characteristic peak ranges from 24.49° to 26°, with a full width at half maximum ranging from 0.165° to 0.3°. A peak position of the (104) characteristic peak ranges from 20.85° to 22°, with a full width at half maximum ranging from 0.16° to 0.3°. A peak position of the (024) characteristic peak ranges from 29.64° to 31°, with a full width at half maximum ranging from 0.18° to 0.3°. A peak position of the (012) characteristic peak ranges from 14.68° to 16°, with a full width at half maximum ranging from 0.165° to 0.3°. The NASICON-type solid-state electrolyte has a grain size ranging from 100 Å to 10000 Å, a lattice distortion rate ranging from 0.05% to 0.5%, and a degree of crystallinity ranging from 95.0% to 99.5%. A lattice constant *a* ranges from 8.300 Å to 8.500 Å; a lattice constant *b* ranges from 8.300 Å to 8.500 Å; a lattice constant c ranges from 20.805 Å to 20.900 Å; a lattice constant $\alpha$ ranges from 90.005° to 91.05°; a lattice constant $\beta$ ranges from 90.005° to 91.05°; and a lattice constant $\gamma$ ranges from 120.005° to 120.050°.

To be specific, presence of the above-described crystal structure information indicates that elements in a corresponding NASICON-type solid-state electrolyte are doped into unit cell sites to form a solid-state solution (based on Vegard's Law). However, introduction of elements M1, M2, M3, M4, and S leads to inconsistencies with chemical composition and element valence of a conventional NASICON-type solid-state electrolyte, which causes the solid-state electrolyte to maintain charge neutrality in a form of point defects (e.g., an absence of an atom at a specific site in a unit cell). The point defects, especially vacancy defects, may expand a transport channel of lithium ion and improve the ionic conductivity. Some defects may cause a reconstruction of an intra-unit cell electric field, improving electronic conductivity.

By introducing the element S, the reactive free cations on the material surface are reduced and the dispersed inert phase precipitates on the surface, which enables the NASICON-type solid-state electrolyte to withstand the further corrosion in the strong reduction environment of $S^{2-}$. When subsequently applied in the sulfide-based all-solid-state battery system, the interface stability of the solid-state electrolyte can be improved.

In the present disclosure, a test method for the phase, the grain size, the lattice constants (*a, b, c, $\alpha$, $\beta$,* and *$\gamma$*), the lattice distortion rate, and the degree of crystallinity of the above-described NASICON-type solid-state electrolyte include: performing phase composition analysis on a target substance by using a pattern obtained from X-ray diffraction (XRD) testing; performing refinement and fitting on a linear pattern of theoretical diffraction intensity and a linear pattern of XRD measured intensity, and implementing quantitative analysis on the grain size, the lattice constants, the lattice distortion rate, and the degree of crystallinity through a whole-powder pattern fitting method. Basic working principle is that, based on a lattice interference phenomenon that occurs between periodic arrangement of lattice atoms in the material and incident high-energy X-ray particles, a specific strong interference signal can be received, and substances with different lattices exhibit different lattice interference signals, which allows for the qualitative or quantitative analysis. The test uses Cu as target material and is performed under Cu K$\alpha$ radiation. A tube voltage of a device is set to 40 kV, a tube current is set to 200 mA, a test angle of the sample ranges from 5° to 120°, a scanning rate is 1°/min, and a scanning step size is 0.02°.

According to an embodiment of the present disclosure, a volume average particle size $Dv_{50}$ of the NASICON-type solid-state electrolyte ranges from 0.01 $\mu$m to 0.2 $\mu$m, for example, 0.05 $\mu$m to 0.2 $\mu$m, 0.1 $\mu$m to 0.2 $\mu$m, 0.12 $\mu$m to 0.17 $\mu$m, 0.15 $\mu$m to 0.17 $\mu$m, etc. According to a specific embodiment of the present disclosure, the volume average particle size of the NASICON-type solid-state electrolyte ranges from 0.05 $\mu$m to 0.1 $\mu$m. Thus, the present disclosure adopts the NASICON-type solid-state electrolyte within this particle size range to coat the cathode active material matrix, contact performance between the cathode active material matrix and the NASICON-type solid-state electrolyte is favorable, and density of contact points is higher, which facilitates transport of the lithium ion at the interface.

According to an embodiment of the present disclosure, a specific surface area of the NASICON-type solid-state electrolyte ranges from 30 $m^2$/g to 300 $m^2$/g, for example, 40 $m^2$/g to 280 $m^2$/g, 50 $m^2$/g to 250 $m^2$/g, 70 $m^2$/g to 230 $m^2$/g, 100 $m^2$/g to 200 $m^2$/g, 120 $m^2$/g to 180 $m^2$/g, 150 $m^2$/g to 170 $m^2$/g, etc. Thus, the present disclosure adopts the NASICON-type solid-state electrolyte with the specific surface area to coat the cathode active material matrix, the transport of the lithium ion at the interface can be further improved.

According to an embodiment of the present disclosure, a pH value of the NASICON-type solid-state electrolyte ranges from 7.2 to 9, for example, 7.5 to 8.7, 7.8 to 8.5, 8 to 8.2, etc. Thus, in the present disclosure, the pH value of the NASICON-type solid-state electrolyte is controlled to be within the above-described range, which enables the NASICON-type solid-state electrolyte to be chemically stable when matched with the cathode active material in a highly alkaline environment, and reduces corrosion of the cathode active material.

According to an embodiment of the present disclosure, an ionic conductivity of the NASICON-type solid-state electrolyte ranges from $4.0\times10^{-4}$ S/cm to $1.0\times10^{-2}$ S/cm, for example, $4.5\times10^{-4}$ S/cm to $5\times10^{-3}$ S/cm, $5\times10^{-4}$ S/cm to $1.0\times10^{-3}$ S/cm, $6\times10^{-4}$ S/cm to $1.0\times10^{-3}$ S/cm, $7\times10^{-4}$ S/cm to $1.0\times10^{-3}$ S/cm, $8\times10^{-4}$ S/cm to $1.0\times10^{-3}$ S/cm, $9\times10^{-4}$ S/cm to $1.0\times10^{-3}$ S/cm, etc.

According to an embodiment of the present disclosure, an electronic conductivity of the NASICON-type solid-state electrolyte ranges from $1.0\times10^{-10}$ S/cm to $1.0\times10^{-8}$ S/cm, for example, $5\times10^{-10}$ S/cm to $1.0\times10^{-8}$ S/cm, $1.0\times10^{-9}$ S/cm to $1.0\times10^{-8}$ S/cm, $5.0\times10^{-9}$ S/cm to $1.0\times10^{-8}$ S/cm, $7.0\times10^{-9}$ S/cm to $1.0\times10^{-8}$ S/cm, etc.

Thus, in the present disclosure, the ionic conductivity and the electronic conductivity of the NASICON-type solid-state electrolyte are controlled to be within the above-described ranges, which can reduce the impedance of the solid-state battery and improve power performance and the cycle performance of the battery.

According to an embodiment of the present disclosure, in the $Li_xM1_yM2_zM3_uM4_v(PO_4)_{w1}(PS_4)_{w2}$, $0<x<2$.

According to an embodiment of the present disclosure, the XRD pattern of the NASICON-type solid-state electrolyte has the (113) characteristic peak, the (104) characteristic peak, the (024) characteristic peak, and the (012) characteristic peak. The peak position of the (113) characteristic peak ranges from 24.490° to 24.880°, with the full width at half maximum ranging from 0.195° to 0.290°. The peak position of the (104) characteristic peak ranges from 20.850° to 21.110°, with the full width at half maximum ranging from 0.200° to 0.300°. The peak position of the (024) characteristic peak ranges from 29.640° to 30.010°, with the full width at half maximum ranging from 0.180° to 0.320°. The peak position of the (012) characteristic peak ranges from 14.680° to 15.990°, with the full width at half maximum ranging from 0.165° to 0.315°.

To be specific, presence of the above-described crystal structure information indicates that the elements in the corresponding NASICON-type solid-state electrolyte are doped into the unit cell sites to form the solid-state solution (based on Vegard's Law). However, the introduction of the elements M1, M2, M3, M4, and S leads to the inconsistencies with the chemical composition and the element valence of the conventional NASICON-type solid-state electrolyte, which causes the solid-state electrolyte to maintain the charge neutrality in the form of point defects (e.g., the absence of the atom at the specific site in the unit cell). The point defects, especially the vacancy defects, may expand the transport channel of the lithium ion and improve the ionic conductivity. Some defects may cause the reconstruction of the intra-unit cell electric field, improving the electronic conductivity. By introducing the element S, the reactive free cations on the material surface are reduced and the dispersed inert phase precipitates on the surface, which enables the NASICON-type solid-state electrolyte to withstand the further corrosion in the strong reduction environment of $S^{2-}$. When subsequently applied in the sulfide-based all-solid-state battery system, the interface stability of the solid-state electrolyte can be improved.

In the present disclosure, a test method for the phase of the above-described NASICON-type solid-state electrolyte include: performing the phase composition analysis and diffraction peak quantification analysis on the target substance by using the pattern obtained from the X-ray diffraction (XRD) testing. The basic working principle is that, based on the lattice interference phenomenon that occurs between the periodic arrangement of the lattice atoms in the material and the incident high-energy X-ray particles, the specific strong interference signal can be received, and the substances with the different lattices exhibit the different lattice interference signals, which allows for the qualitative or quantitative analysis. The test uses the Cu as target material and is performed under the Cu K$\alpha$ radiation. The tube voltage of the device is set to 40 kV, the tube current is set to 200 mA, the test angle of the sample ranges from 5° to 120°, the scanning rate is 1°/min, and the scanning step size is 0.02°.

According to an embodiment of the present disclosure, the volume average particle size $Dv_{50}$ of the NASICON-type solid-state electrolyte ranges from 0.01 $\mu$m to 0.2 $\mu$m, for example, 0.05 $\mu$m to 0.2 $\mu$m, 0.1 $\mu$m to 0.2 $\mu$m, 0.12 $\mu$m to 0.17 $\mu$m, 0.15 $\mu$m to 0.17 $\mu$m, etc. According to a specific embodiment of the present disclosure, the volume average particle size of the NASICON-type solid-state electrolyte ranges from 0.05 $\mu$m to 0.1 $\mu$m. Thus, the present disclosure adopts the NASICON-type solid-state electrolyte within this particle size range to coat the cathode active material matrix, the contact performance between the cathode active material matrix and the NASICON-type solid-state electrolyte is favorable, and the density of the contact points is higher, which facilitates the transport of the lithium ion at the interface.

In the present disclosure, Dv50 refers to a corresponding particle size when a cumulative volume distribution percentage reaches 50%. With reference to the standard GB/T 19077-2016, Dv50 is determined using a laser particle size analyzer (e.g., Malvern Master Size 3000).

In the present disclosure, the specific surface area of the NASICON-type solid-state electrolyte can be determined using the instruments and the methods known in the art. For example, the specific surface area can be obtained with reference to the following method: using a Micromeritics multi-station fully automatic specific surface area and porosity analyzer GeminiVII2390, taking approximately 7 g of the sample and placing the sample in a 9cc long tube with a bulb, degassing at 200°C for 2 hours, and placing the sample in a main unit for testing to obtain BET specific surface area data of a cathode active material 1000.

According to an embodiment of the present disclosure, the pH value of the NASICON-type solid-state electrolyte ranges from 7.2 to 9, for example, 7.5 to 8.7, 7.8 to 8.5, 8 to 8.2, etc. Thus, in the present disclosure, the pH value of the NASICON-type solid-state electrolyte is controlled to be within the above-described range, which enables the NASICON-type solid-state electrolyte to be chemically stable when matched with the cathode active material in the highly alkaline environment, and reduces the corrosion of the cathode active material.

In the present disclosure, a test method for the pH value of the NASICON-type solid-state electrolyte includes: weighing 5 g of a to-be-tested sample, and adding the sample in 95 g of room-temperature deionized water and stirring for 5 minutes to obtain a slurry; filtering the slurry that has been stirred through a Buchner funnel with filter paper to obtain filtrate; and performing a titration test on the obtained filtrate in a Metrohm 888 potentiometric titrator at a room temperature or perform a directly testing by using a pH meter.

According to an embodiment of the present disclosure, the ionic conductivity of the NASICON-type solid-state electrolyte ranges from $1.0 \times 10^{-4}$ S/cm to $1.5 \times 10^{-3}$ S/cm, for example, $1.5 \times 10^{-4}$ S/cm to $5 \times 10^{-3}$ S/cm, $3.0 \times 10^{-4}$ S/cm to $1.0 \times 10^{-3}$ S/cm, $4.0 \times 10^{-4}$ S/cm to $1.0 \times 10^{-3}$ S/cm, $5.0 \times 10^{-4}$ S/cm to $1.0 \times 10^{-3}$ S/cm, $7.0 \times 10^{-4}$ S/cm to $1.1 \times 10^{-3}$ S/cm, $9 \times 10^{-4}$ S/cm to $1.1 \times 10^{-3}$ S/cm, etc.

According to an embodiment of the present disclosure, the electronic conductivity of the NASICON-type solid-state electrolyte ranges from $1.0 \times 10^{-10}$ S/cm to $1.0 \times 10^{-8}$ S/cm, for example, $5 \times 10^{-10}$ S/cm to $1.0 \times 10^{-8}$ S/cm, $1.0 \times 10^{-9}$ S/cm to $1.0 \times 10^{-8}$ S/cm, $5.0 \times 10^{-9}$ S/cm to $1.0 \times 10^{-8}$ S/cm, $7.0 \times 10^{-9}$ S/cm to $1.0 \times 10^{-8}$ S/cm, etc.

Thus, in the present disclosure, the ionic conductivity and the electronic conductivity of the NASICON-type solid-state electrolyte are controlled to be within the above-described ranges, which can reduce the impedance of the solid-state battery and improve the power performance and the cycle performance of the battery.

In the present disclosure, a test method for the ionic conductivity and the electronic conductivity of the NASICON-type solid-state electrolyte includes: performing an electrochemical impedance spectroscopy (EIS) test and a direct current (DC) polarization test at an electrochemical workstation. A frequency of an electrical signal of the EIS test ranges from 0.01 Hz to 10,000,000 Hz, and perturbation amplitude of an alternating voltage is 10 mV. The DC test has a constant voltage of 1.0 V and lasts for 3000 s. The ionic conductivity and the electronic conductivity are calculated using a formula $\sigma = L/RS$, where R is a resistance value, L is a thickness, and S is a particle area. To be specific, the tests for the ionic conductivity and the electronic conductivity of the above-described NASICON-type solid-state electrolyte are performed at a mold cell layer. Specific composition of a mold cell is: stainless steel electrode//conductive carbon//solid-state electrolyte//conductive carbon//stainless steel electrode. An assembly method for a mold cell testing apparatus includes:

prepressing approximately 100 mg of a solid-state electrolyte sample, adding the conductive carbon to both sides of the solid-state electrolyte sample, pressing under 300 MPa to form a battery plate, and placing the battery plate between the two stainless steel electrodes to assemble the mold cell.

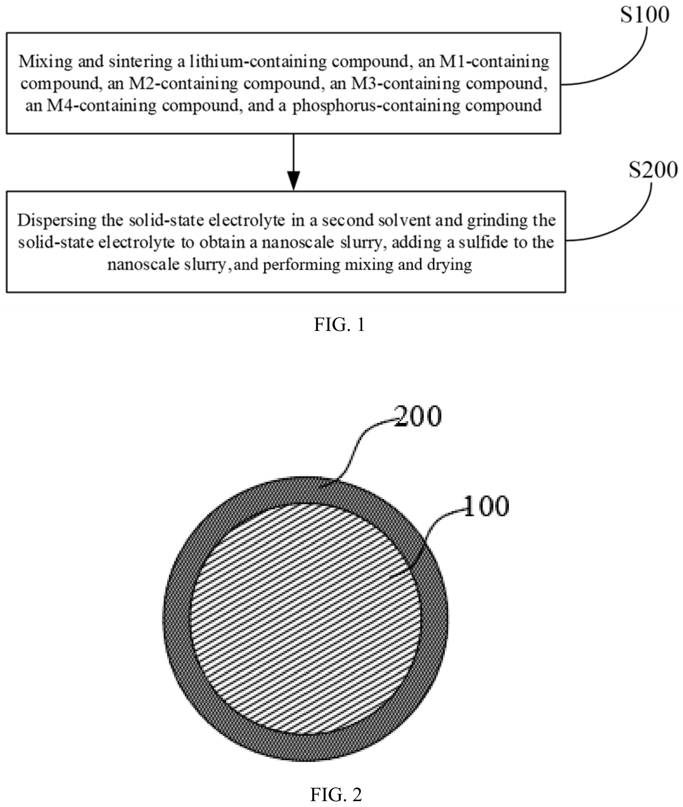

In a second aspect of the present disclosure, the present disclosure provides a method for preparing the NASICON-type solid-state electrolyte. According to an embodiment of the present disclosure, as illustrated in FIG. 1, the method includes the following steps.

S100 includes: mixing and sintering a lithium-containing compound, an M1-containing compound, an M2-containing compound, an M3-containing compound, an M4-containing compound, and a phosphorus-containing compound.

In this step, the lithium-containing compound, the M1-containing compound, the M2-containing compound, the M3-containing compound, the M4-containing compound, and the phosphorus-containing compound are mixed and sintered, to obtain a solid-state electrolyte.

According to an embodiment of the present disclosure, the lithium-containing compound, the M1-containing compound, the M2-containing compound, the M3-containing compound, and the M4-containing compound may include but are not limited to oxides, hydroxides, oxalate, organic alkoxides, or carbonates of corresponding elements. The phosphorus-containing compound may be phosphoric acid or phosphate. Also, the lithium-containing compound, the M1-containing compound, the M2-containing compound, the M3-containing compound, and the M4-containing compound may also be the phosphates of the corresponding elements. When at least one of the lithium-containing compound, the M1-containing compound, the M2-containing compound, the M3-containing compound, or the M4-containing compound is the phosphate of the corresponding element, there is no need to separately add the phosphorus-containing compound.

According to an embodiment of the present disclosure, the lithium-containing compound, the M1-containing compound, the M2-containing compound, the M3-containing compound, the M4-containing compound, and the phosphorus-containing compound may be mixed and sintered through the following steps.

Step 1-1 includes: mixing the lithium-containing compound, the M1-containing compound, the M2-containing compound, the M3-containing compound, the M4-containing compound, the phosphorus-containing compound, an organic monomer, a first solvent, an initiator, and a catalyst, to obtain a mixture.

As an example, the organic monomer includes but is not limited to at least one of acrylamide, methylene bisacrylamide, styrene, butadiene, or methyl methacrylate; the first solvent includes but is not limited to at least one of water, N-methyl-2-pyrrolidone, phthalate, diester, long-chain alcohol, or pyrrolidone; the initiator includes but is not limited to at least one of benzoyl peroxide, $(NH_4)_2S_2O_8$, or $K_2S_2O_8$; and the catalyst includes at least one of N,N,N'N'-tetramethylethylenediamine, N,N,N',N'-tetramethyl-1,6-hexanediamine, N,N-diisopropylethylamine, or N-(3-aminopropyl)-N-dodecyl-1,3-propylenediamine.

Step 1-2 includes: heating the mixture to initiate a polymerization reaction, to obtain a bulk solid-state electrolyte precursor.

According to an embodiment of the present disclosure, in step 1-2, the polymerization reaction is performed at a temperature ranging from 80°C to 200°C, for example, 100°C to 200°C, 120°C to 170°C, 150°C to 160°C, etc. Thus, at this polymerization temperature, the organic monomer undergoes the polymerization reaction under an action of the initiator, in such a manner that elements of raw materials of a NASICON material can be combined uniformly at a molecular layer. When subsequent sintering is performed, a polymer is oxidized and volatilized, and the raw materials react with each other to easily form a uniform NASICON phase.

According to a specific embodiment of the present disclosure, the polymerization reaction is performed at a temperature ranging from 90°C to 150°C. Further, the polymerization reaction is performed at a temperature ranging from 96°C to 120°C.

Step 1-3 includes: pre-sintering the bulk solid-state electrolyte precursor, followed by crushing, to obtain a powdery solid-state electrolyte precursor.

According to an embodiment of the present disclosure, the obtained bulk solid-state electrolyte precursor is pre-sintered, in such a manner that organic polymers in the solid-state electrolyte precursor can be removed to prevent residual organics from affecting electrical performance, and the powdery solid-state electrolyte precursor is obtained through crushing.

According to an embodiment of the present disclosure, in step 1-3, the pre-sintering is performed at a temperature ranging from 300°C to 600°C, for example, 350°C to 550°C, 400°C to 500°C, 450°C to 500°C, etc. According to a specific embodiment of the present disclosure, the pre-sintering is performed at a temperature ranging from 350°C to 575°C. Further, the pre-sintering is performed at a temperature ranging from 380°C to 560°C.

According to an embodiment of the present disclosure, in step 1-3, the pre-sintering lasts for 2 hours to 6 hours, for example, 2.5 hours to 5.5 hours, 3 hours to 5 hours, 3.5 hours to 4.5 hours, 3.5 hours to 4 hours, etc. According to a specific embodiment of the present disclosure, the pre-sintering lasts for 2 hours to 5 hours. Further, the pre-sintering lasts for 2 hours to 4 hours.

Thus, in the present disclosure, the above-described pre-sintering conditions are adopted, which can significantly remove the organic polymers in the solid-state electrolyte precursor to prevent the residual organics from affecting the electrical performance.

Step 1-4 includes: sintering the powdery solid-state electrolyte precursor, followed by crushing, to obtain a micron-scale solid-state electrolyte.

According to an embodiment of the present disclosure, in step 1-4, the sintering is performed at a temperature ranging from 650°C to 900°C, for example 700°C to 850°C, 750°C to 800°C, etc. According to a specific embodiment of the present disclosure, the sintering is performed at a temperature ranging from 700°C to 875°C. Further, the sintering is performed at a temperature ranging from 730°C to 860°C.

According to an embodiment of the present disclosure, in step 1-4, the sintering lasts for 4 hours to 10 hours, for example 5 hours to 9 hours, 6 hours to 8 hours, 6.5 hours to 7.5 hours. According to a specific embodiment of the present disclosure, the sintering lasts for 5 hours to 9 hours. Further, the sintering lasts for 6 hours to 8 hours.

S200 includes: dispersing the solid-state electrolyte in a second solvent and performing grinding to obtain a nanoscale slurry, adding a sulfide to the nanoscale slurry, and performing mixing and drying.

In this step, the solid-state electrolyte is dispersed in the second solvent and ground to obtain the nanoscale slurry. The sulfide is added to the nanoscale slurry for mixing, and the drying is performed under vacuum or other inert atmospheres to obtain a powdery, nanoscale NASICON-type solid-state electrolyte. When the sulfide is added to the slurry with nanoscale particle size for sufficient mixing and contact, in the drying process, sulfide raw materials and the second solvent sublimate. During phase transition from solid to gas, the sulfide has high reactivity, and introduction of sulfur is completed on a surface of the nanoscale solid-state electrolyte with a high specific surface area. Gaseous sulfide and the second solvent are discharged with a tail gas. This method has high sulfur introduction efficiency and a favorable impurity removal effect.

According to an embodiment of the present disclosure, a volume average particle size Dv50 of the slurry ranges from 5 nm to 500 nm, for example, 10 nm to 500 nm, 50 nm to 500 nm, 100 nm to 450 nm, 150 nm to 400 nm, 200 nm to 350 nm, 250 nm to 300 nm tec. According to a specific embodiment of the present disclosure, the volume average particle size Dv50 of the slurry ranges from 10 nm to 200 nm. Further, the volume average particle size Dv50 of the slurry ranges from 50 nm to 100 nm. Thus, in the present disclosure, by controlling the volume average particle size Dv50 of the slurry within the above-described range, the solid-state electrolyte may have high reactivity and favorable dispersibility. In a coating process of the cathode active material matrix, favorable physicochemical contact between the solid-state electrolyte and the cathode active material matrix, and uniform and dense coating can be achieved.

As an example, the second solvent includes but is not limited to at least one of n-heptane, toluene, or dimethyl ether. The sulfide includes but is not limited to a sulfur-containing compound with a low sublimation temperature (e.g., a sublimation temperature ranging from 100°C to 300°C), such as phosphorus pentasulfide, lithium sulfide, thiourea, and elemental sulfur.

According to an embodiment of the present disclosure, an addition amount of the sulfide is 0.1 wt% to 3 wt% of the solid-state electrolyte, for example, 0.5 wt% to 3 wt%, 0.7 wt% to 3 wt%, 1 wt% to 3 wt%, 1.5 wt% to 2.5 wt%, 1.7 wt% to 2 wt%, etc. To be specific, in a heating process, element sulfur may be lost. Therefore, the addition amount of the sulfide in this process is excessive compared with a content of the element sulfur in the composition of the NASICON-type solid-state electrolyte. According to a specific embodiment of the present disclosure, the addition amount of the sulfide is 0.1 wt% to 1 wt% of the solid-state electrolyte.

According to an embodiment of the present disclosure, the drying is performed at a temperature ranging from 120°C to 600°C, for example 150°C to 580°C, 170°C to 550°C, 200°C to 520°C, 230°C to 500°C, 250°C to 480°C, 270°C to 450°C, 300°C to 420°C, 320°C to 400°C, 350°C to 380°C, etc. According to a specific embodiment of the present disclosure, the drying is performed at a temperature ranging from 150°C to 500°C.

Thus, for the NASICON-type solid-state electrolyte obtained by the method of the present disclosure, transition metals (M1 to M4) of the NASICON-type solid-state electrolyte are introduced during thermal polymerization, achieving atomic-level uniform mixing of elements. The element sulfur is introduced in a nanonization heating process to realize sulphonated reaction. The prepared solid-state electrolyte has a uniform composition, with a nanoscale average particle size. Presence of transition elements inside the crystal lattice endows the prepared solid-state electrolyte with excellent structural stability. Also, the slurry and powder of the prepared NASICON-type solid-state electrolyte have high specific surface areas and possess strong specific surface energy, which are adapted to preparation of a composite solid-state electrode and a ceramic-coated separator. Thus, by adopting this method, the above-described NASICON-type solid-state electrolyte with excellent interface stability and ionic conductivity can be prepared. By coating the NASICON-type solid-state electrolyte on the cathode active material matrix and thus applying the NASICON-type solid-state electrolyte to the solid-state battery, the space charge layer between the cathode active material matrix and the solid-state electrolyte layer can be reduced, the interface side reactions can be reduced, and the impedance of the solid-state battery can be lowered, thereby improving the capacity, the cycle performance, and the rate capability of the solid-state battery.

It should be noted that, features and advantages described above for the NASICON-type solid-state electrolyte are also applicable to the method for preparing the NASICON-type solid-state electrolyte, which will not be repeated here.

In a third aspect of the present disclosure, the present disclosure provides a cathode active material. According to an embodiment of the present disclosure, as illustrated in FIG. 2, the cathode active material includes a cathode active material matrix 100 and a coating layer 200.

As an example, the cathode active material matrix 100 includes but is limited to at least one of lithium nickel oxide, lithium cobalt oxide, lithium manganese oxide, lithium nickel manganese oxide, lithium nickel cobalt manganese oxide, lithium nickel cobalt aluminum oxide, lithium nickel cobalt manganese aluminum oxide, lithium-rich manganese-based layered oxide and derivative thereof, lithium ferrous phosphate, or lithium manganese iron phosphate.

According to an embodiment of the present disclosure, the coating layer 200 is formed on at least a portion of a surface of the cathode active material matrix 100. The coating layer 200 includes the NASICON-type solid-state electrolyte according to the first aspect of the present disclosure or the NASICON-type solid-state electrolyte obtained by the method according to the second aspect of the present disclosure.

For the cathode active material according to the embodiments of the present disclosure, the coating layer 200 including the above-described NASICON-type solid-state electrolyte is formed on the surface of the cathode active material matrix 100. That is, when the cathode active material is assembled into a solid-state battery, the coating layer 200 including the above-described NASICON-type solid-state electrolyte is located between the cathode active material matrix 100 and the solid-state electrolyte layer. In this way, on one hand, a large chemical potential gradient effect between the cathode active material matrix 100 and the solid-state electrolyte layer can be buffered; on the other hand, formation of a lithium depletion layer at an interface between the cathode active material matrix 100 and the solid-state electrolyte layer can be inhibited, effectively reducing a large interface resistance caused by the space charge layer, and inhibiting the interface side reactions. Also, the NASICON-type solid-state electrolyte exhibits the excellent interface stability and ionic conductivity, which can improve interface stability of the cathode active material. By applying the NASICON-type solid-state electrolyte to the solid-state battery, the space charge layer between the cathode active material matrix 100 and the solid-state electrolyte layer can be reduced, the interface side reactions can be reduced, and the impedance of the solid-state battery can be lowered, thereby improving the capacity, the cycle performance, and the rate capability of the solid-state battery.

According to an embodiment of the present disclosure, based on a total amount of the cathode active material matrix 100, a mass fraction of the NASICON-type solid-state electrolyte ranges from 0.05% to 1%, for example, 0.08% to 1%, 0.1% to 1%, 0.3% to 1%, 0.5% to 1%, 0.6% to 1%, 0.7% to 1%, 0.8% to 1%, 0.9% to 1%, etc. Therefore, in the present disclosure, by controlling the mass fraction of the NASICON-type solid-state electrolyte within the above-described range, the interface stability and the ionic conductivity of the cathode active material can be further improved. Thus, by applying the NASICON-type solid-state electrolyte to the solid-state battery, the space charge layer between the cathode active material matrix 100 and the solid-state electrolyte layer can be reduced, the interface side reactions can be reduced, and the impedance of the solid-state battery can be lowered, thereby improving the capacity, the cycle performance, and the rate capability of the solid-state battery.

According to an embodiment of the present disclosure, in acid-base titration treatment, the cathode active material exhibits a phosphate characteristic titration peak at a pH value ranging from 5 to 8. To be specific, appearance of the characteristic titration peak indicates that phosphate is generated at an interface between the NASICON-type solid-state electrolyte and the cathode active material matrix 100 in the coating process. The phosphates can serve as a buffer layer to balance potential difference between the NASICON-type solid-state electrolyte and the cathode active material, alleviate formation of the space charge layer, reduce the interface impedance, and thereby better exert electrochemical performance of the cathode material.

In the present disclosure, the "characteristic titration peak" is obtained through an acid-base titration test. Specific steps includes: weighing 5 g of a to-be-tested sample, and adding the sample in 95 g of room-temperature deionized water and stirring for 5 minutes to obtain a slurry; filtering the slurry that has been stirred through a Buchner funnel with filter paper to obtain filtrate; and performing a titration test on the obtained filtrate in a Metrohm 888 potentiometric titrator at a room temperature, obtaining a titration curve, and reading a pH value corresponding to a position of the characteristic titration peak in the curve.

A potential corresponding to a stoichiometric ratio between concentration of $PO_4^{3-}$ in a to-be-tested solution and concentration of hydrochloric acid in titrant is an equivalence point potential. At this potential, there is a characteristic titration peak in the titration curve. The equivalence point potential is calculated by a formula: $E_{eq}=E_{end} + (E_{initial}-E_{end}) * V_{titrant} / V_{total}$, where $E_{eq}$ is the equivalence point potential; $E_{end}$ is an end point titration potential; $E_{initial}$ is an initial titration potential; $V_{titrant}$ is a volume of the titrant added; $V_{total}$ is a total volume of the titrant. A relationship between the end point titration potential and the initial titration potential is inferred from the volume of the titrant, and the equivalence point potential is further calculated. In the formula, multiplying by $(E_{initial} - E_{end})$ is to ensure that each drop of the titrant added as the volume of the titrant increases contributes to the equivalence point potential.

It should be noted that, features and advantages described above for the NASICON-type solid-state electrolyte and a preparation method thereof are also applicable to the cathode active material, which will not be repeated here.

**In** a fourth aspect of the present disclosure, the present disclosure provides a method for preparing the above-described cathode active material. According to an embodiment of the present disclosure, the method includes: mixing the cathode active material matrix with the NASICON-type solid-state electrolyte; and performing heat treatment, to form the coating layer including the NASICON-type solid-state electrolyte on at least a portion of the surface of the cathode active material matrix. The NASICON-type solid-state electrolyte includes the NASICON-type solid-state electrolyte according to the first aspect of the present disclosure or the NASICON-type solid-state electrolyte obtained by the method according to the second aspect of the present disclosure.

Thus, by adopting this method, the above-described cathode active material with high interface stability and ionic conductivity can be prepared. By applying the cathode active material to the solid-state battery, the space charge layer between the cathode active material matrix and the solid-state electrolyte layer can be reduced, the interface side reactions can be reduced, and the impedance of the solid-state battery can be lowered, thereby improving the capacity, the cycle performance, and the rate capability of the solid-state battery.

According to an embodiment of the present disclosure, the heat treatment is performed at a temperature ranging from 300°C to 700°C, for example 350°C to 650°C, 400°C to 600°C, 450°C to 550°C, 450°C to 500°C, etc. According to a specific embodiment of the present disclosure, the heat treatment is performed at a temperature ranging from 375°C to 625°C. Further, the heat treatment is performed at a temperature ranging from 420°C to 580°C.

According to an embodiment of the present disclosure, the heat treatment lasts for 2 hours to 10 hours, for example 2 hours to 9 hours, 3 hours to 8 hours, 4 hours to 7 hours, 5 hours to 6 hours, etc. According to a specific embodiment of the present disclosure, the heat treatment lasts for 4 hours to 10 hours. Further, the heat treatment lasts for 5 hours to 10 hours.

Thus, by adopting the above-described conditions of the heat treatment, adhesion of the coating layer including the NASICON-type solid-state electrolyte to the cathode active material matrix can be significantly enhanced, enhancing stability of the cathode active material.

It should be noted that, features and advantages described above for the cathode active material are also applicable to the method for preparing the cathode active material, which will not be repeated here.

**In** a fifth aspect of the present disclosure, the present disclosure provides a cathode plate including the cathode active material according to the third aspect of the present disclosure or the cathode active material obtained by the method according to the fourth aspect of the present disclosure.

According to an embodiment of the present disclosure, the cathode plate includes a cathode current collector and a cathode active material layer disposed on the cathode current collector. The cathode active material layer includes the above-described cathode active material. The cathode current collector may be a metal foil or a composite current collector (the composite current collector can be formed by disposing a metal material on a polymer substrate), for example, the cathode current collector may be an aluminum foil.

According to some embodiments of the present disclosure, the cathode active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

According to some embodiments of the present disclosure, the cathode active material layer may further optionally include a conductive agent. As an example, the conductive agent may include at least one of superconducting carbon, acetylene black, carbon black, Ketjen black, carbon dots, carbon nanotubes, graphene, or carbon nanofibers.

According to some embodiments of the present disclosure, the cathode plate can be prepared by the following method. Components for preparing the cathode plate, such as the cathode active material, the conductive agent, the binder, and any other components, are dispersed in a solvent (such as N-methylpyrrolidone) to form a cathode slurry. The cathode slurry is coated on the cathode current collector, and followed by drying, cold pressing and other processes, to obtain the cathode plate.

It should be noted that, features and advantages described above for the cathode active material and the preparation method thereof are also applicable to the cathode plate, which will not be repeated here.

In a sixth aspect of the present disclosure, the present disclosure provides a solid-state battery. According to an embodiment of the present disclosure, the solid-state battery includes the above-described cathode plate.

As an example, the solid-state battery includes a cathode plate, an anode plate, and a solid-state electrolyte layer. The solid-state electrolyte layer is located between the cathode plate and the anode plate.

According to an embodiment of the present disclosure, the anode plate includes an anode current collector and an anode active material layer disposed on the anode current collector. The anode active material layer includes an anode active material. The anode current collector may be a metal foil or a composite current collector (the composite current collector can be formed by disposing the metal material on a polymer substrate), for example, the cathode current collector may be the aluminum foil.

According to an embodiment of the present disclosure, the anode active material may include at least one of the following materials: artificial graphite, natural graphite, soft carbon, hard carbon, silicon-based material, tin-based material, lithium titanate, etc.

According to an embodiment of the present disclosure, the anode active material layer may further optionally include a conductive agent. The conductive agent may include at least one of superconducting carbon, acetylene black, carbon black, Ketjen black, carbon dots, carbon nanotubes, graphene, or carbon nanofibers.

According to an embodiment of the present disclosure, the anode active material layer may further optionally include other additives, such as a thickener (e.g., sodium carboxymethyl cellulose (CMC-Na)).

According to an embodiment of the present disclosure, the anode plate can be prepared by the following method. Components for preparing the anode plate, such as the anode active material, the conductive agent, and the binder, are dispersed in a solvent (e.g., deionized water) to form an anode slurry. The anode slurry is coated on the anode current collector, and followed by drying, cold pressing, and other processes, to obtain the anode plate.

According to an embodiment of the present disclosure, the anode plate may include a metal lithium plate or a lithium alloy, such as a lithium-indium alloy.

According to an embodiment of the present disclosure, the solid-state electrolyte layer between the cathode plate and the anode plate may include but is not limited to at least one of LiPSCl, LiGePS, LiSnPS, LiSiPSCl, LiSiPSBr, or LiSiPSI.

It should be noted that, features and advantages described above for the cathode plate are also applicable to the solid-state battery, which will not be repeated here.

In a seventh aspect of the present disclosure, the present disclosure provides an electrical device. According to an embodiment of the present disclosure, the electrical device includes the above-described solid-state battery. According to an embodiment of the present disclosure, the electrical device may include but is not limited to a mobile phone, a laptop computer, an electric vehicle, etc.

It should be noted that, features and advantages described above for the solid-state battery are also applicable to the electrical device, which will not be repeated here.

The embodiments of the present disclosure are described below. The embodiments described below are exemplary and are merely used to explain the present disclosure, and cannot be construed to limit the present disclosure. The techniques or conditions without specific indication shall be those described in the literature in the field or in accordance with the product specification. The reagents or instruments used without the indication of the manufacturers are all conventional products that can be purchased commercially.

**Example 1**

The method for preparing the NASICON-type solid-state electrolyte includes the following steps.

In step 1-1, compounds $Li_2CO_3$, $Al_2O_3$, ZnO, $TiO_2$, and $NH_4H_2PO_4$ were weighed based on the stoichiometric ratio of the NASICON-type solid-state electrolyte, mixed with a certain amount of pure water, and then mixed and crushed in a ball milling device, to obtain a mixed slurry A with a solid content of *50%*. *50* wt % of acrylamide (monomer), $(NH_4)_2S_2O_8$ (initiator) and a N,N,N',N'-tetramethylethylenediamine (TEMED) catalyst were added to the mixed slurry A and the mixture thereof was dispersed uniformly in a stirring device, to obtain a mixed slurry B.

In step 1-2, the mixed slurry B was poured into a sagger container, dried in a blast oven at 100°C, and the polymerization reaction of substances in the mixed slurry B was initiated. After 12 hours, a bulk solid-state electrolyte precursor was obtained.

In step 1-3, the bulk solid-state electrolyte precursor obtained in step 1-2 was pre-sintered at 500°C in a muffle furnace for 2 hours, and the sintered product was crushed in a blender for 5 minutes, to obtain a powdery solid-state electrolyte precursor.

In step 1-4, the powdery solid-state electrolyte precursor obtained in step 1-3 was sintered at 750°C in a muffle furnace for 6 hours, and the sintered product was crushed in a jet mill, to obtain a powdery, micron-scale solid-state electrolyte.

In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 50%. Subsequently, the slurry was mixed with $P_2S_5$ (the solid-state electrolyte and $P_2S_5$ were mixed at a ratio of 1:0.01) and dried under nitrogen protection at a drying temperature of 300°C. The powder obtained by heat treatment was further dissociated by a jet mill to obtain the NASICON-type solid-state electrolyte.

The remaining Examples and Comparative Examples differ from Example 1 as described below.

**Example 2**

Differences from Example 1 are as follows. Raw materials used in step 1-1 were LiOH, $Al_2O_3$, $Y_2O_3$, $TiO_2$, and $P_2O_5$. In step 1-4, the solid-state electrolyte precursor obtained in step 1-3 was sintered in a muffle furnace at 800°C for 6 hours. In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.02) and dried under nitrogen protection at a drying temperature of 450°C.

**Example 3**

Differences from Example 1 are as follows. Raw materials used in step 1-1 were $Li_3PO_4$, $AlPO_4$, $ZrO_2$, $TiO_2$, and $NH_4H_2PO_4$. In step 1-4, the solid-state electrolyte precursor obtained in step 1-3 was sintered in a muffle furnace at 700°C for 6 hours. In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with $Li_7P_3S_{11}$ (the solid-state electrolyte and $Li_7P_3S_{11}$ were mixed at a mass ratio of 1:0.05) and subjected to spray-drying treatment under nitrogen protection at a drying temperature of 150°C.

**Example 4**

Differences from Example 1 are as follows. Raw materials used in step 1-1 were $C_2H_5OLi$, $C_6H_8Al_2O_{16}$, $TiO_2$, $NH_4H_2PO_4$, and $C_4H_4NNbO_9 \cdot xH_2O$. In step 1-4, the solid-state electrolyte precursor obtained in step 1-3 was sintered in a muffle furnace at 800°C for 6 hours. In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 50%. Subsequently, the slurry was mixed with $Li_3PS_4$ (the solid-state electrolyte and $Li_3PS_4$ were mixed at a mass ratio of 1:0.005) and subjected to spray-drying treatment under nitrogen protection at a drying temperature of 200°C.

**Example 5**

Differences from Example 1 are as follows. Raw materials used in step 1-1 were $Li_3PO_4$, $AlPO_4$, $GeO_2$, $TiO_2$, $NH_4H_2PO_4$, and $H_3BO_3$. In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.02) and dried in an oven under nitrogen protection at a drying temperature of 450°C.

**Example 6**

Differences from Example 1 are as follows. Raw materials used in step 1-1 were $Li_3PO_4$, $AlPO_4$, $La_2O_3$, $TiO_2$, $NH_4H_2PO_4$, and $WO_3$. In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.01) and dried in an oven under nitrogen protection at a drying temperature of 450°C.

**Example 7**

Differences from Example 1 are as follows. Raw materials used in step 1-1 were $Li_2CO_3$, $Al_2O_3$, $MgO$, $TiO_2$, $NH_4H_2PO_4$, and $SiO_2$. In step 1-5, the solid-state electrolyte obtained in step 1-4 was dispersed in a solvent of toluene and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.02) and dried in an oven under nitrogen protection at a drying temperature of 450°C.

**Example 8**

Differences from Example 1 are as follows. Raw materials used in step 1-1 were $Li_2CO_3$, $Al_2O_3$, $ZnO$, $TiO_2$, and $NH_4H_2PO_4$. In step 1-2, the mixed slurry A was poured into a sagger container, and pre-sintered at 500°C in a muffle furnace for 2 hours. The sintered product was crushed in a blender for 5 minutes to obtain a powdery solid-state electrolyte precursor. In step 1-3, the powdery solid-state electrolyte precursor obtained in step 1-3 was sintered at 750°C in a muffle furnace for 6 hours. In step 1-4, the solid-state electrolyte obtained in step 1-3 was dispersed in a solvent of n-heptane and sand-milled in a sand mill at 2000 rpm for 2 hours, to obtain a nanoscale slurry with a solid content of 50%. Subsequently, the slurry was mixed with $P_2S_5$ (the solid-state electrolyte and $P_2S_5$ were mixed at a ratio of 1:0.01) and dried under nitrogen protection at a drying temperature of 300°C.

**Example 9**

Differences from Example 1 are as follows. In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a ratio of 1:0.005) and dried under nitrogen protection at a drying temperature of 250°C.

**Example 10**

Differences from Example 1 are as follows. In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 55%. Subsequently, the slurry was mixed with $P_2S_5$ (the solid-state electrolyte and $P_2S_5$ were mixed at a ratio of 1:0.08) and dried under nitrogen protection at a drying temperature of 350°C.

**Example 11**

Differences from Example 1 are as follows. In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with $P_2S_5$ (the solid-state electrolyte and $P_2S_5$ were mixed at a ratio of 1:0.1) and dried under nitrogen protection at a drying temperature of 350°C.

**Example 12**

Differences from Example 1 are as follows. In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with elemental sulfur (the solid-state electrolyte and S were mixed at a ratio of 1:0.2) and dried under nitrogen protection at a drying temperature of 450°C.

**Example 13**

Differences from Example 1 are as follows. In step 1-5, the solid-state electrolyte obtained in step 1-4 was dispersed in a solvent of n-heptane and sand-milled in a sand mill at 2000 rpm for 2 hours to obtain a nanoscale slurry with a solid content of 55%. Subsequently, the slurry was mixed with thiourea (the solid-state electrolyte and the thiourea were mixed at a mass ratio of 1:0.3) and dried under nitrogen protection at a drying temperature of 400°C.

**Example 14**

Differences from Example 1 are as follows. In step 1-5, the solid-state electrolyte obtained in step 1-4 was dispersed in a solvent of n-heptane and sand-milled in a sand mill at 2000 rpm for 24 hours to obtain a nanoscale slurry with a solid content of 55%.

**Example 15**

Differences from Example 1 are as follows. Raw materials used in step 1-1 were LiOH, $Al_2O_3$, $Y_2O_3$, $TiO_2$, and $P_2O_5$. In step 1-5, the solid-state electrolyte obtained in step 1-4 was dispersed in a solvent of dimethyl ether and sand-milled in a sand mill at 2000 rpm for 48 hours to obtain a nanoscale slurry with a solid content of 55%.

**Example 16**

A method for preparing a sulfur-modified NASICON-type solid-state electrolyte includes steps as follows.
In step 1-1, compounds $Li_3PO_4$, $AlPO_4$, $ZrO_2$, $TiO_2$, and $NH_4H_2PO_4$ were weighed based on a stoichiometric ratio of a NASICON-type solid-state electrolyte S3, mixed with a certain amount of pure water, and then mixed and crushed in a ball milling device to obtain a mixed slurry A with a solid content of *50%*. *50* wt % of acrylamide (monomer), $(NH_4)_2S_2O_8$ (initiator), and TEMED (catalyst) were added to the mixed slurry A and dispersed uniformly in a stirring device to obtain a mixed slurry B.
In step 1-4, the solid-state electrolyte precursor obtained in step 1-3 was sintered at 700°C in a muffle furnace for 6 hours, and the sintered product was crushed in a jet mill to obtain a powdery, micron-scale solid-state electrolyte.
In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with $Li_7P_3S_{11}$ (the solid-state electrolyte and $Li_7P_3S_{11}$ were mixed at a mass ratio of 1:0.05) and dried under nitrogen protection at a drying temperature of 150°C. The powder obtained through drying was further dissociated by a jet mill to obtain a sulfur-modified NASICON-type solid-state electrolyte with chemical composition of $Li_{1.3}Al_{0.3}Ti_{1.69}Zr_{0.01}(PO_4)_{2.995}(PS_4)_{0.005}$.

## Example 17

A method for preparing a sulfur-modified NASICON-type solid-state electrolyte includes steps as follows.

In step 1-1, compounds $C_2H_5OLi$, $C_6H_8Al_2O_{16}$, $TiO_2$, $NH_4H_2PO_4$, and $C_4H_4NNbO_9 \cdot xH_2O$ were weighed based on the stoichiometric ratio of the NASICON-type solid-state electrolyte, mixed with a certain amount of pure water, and then mixed and crushed in a ball milling device to obtain a mixed slurry A with a solid content of *50%*. *50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B.

In step 1-4, the solid-state electrolyte precursor obtained in step 1-3 was sintered at 800°C in a muffle furnace for 6 hours, and the sintered product was crushed in a jet mill to obtain a powdery, micron-scale solid-state electrolyte.

In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 50%. Subsequently, the slurry was mixed with $Li_3PS_4$ (the solid-state electrolyte and $Li_3PS_4$ were mixed at a mass ratio of 1:0.005) and subjected to spray-drying treatment under nitrogen protection at a drying temperature of 200°C. The powder obtained through drying was further dissociated by a jet mill to obtain a sulfur-modified NASICON-type solid-state electrolyte with chemical composition of $Li_{1.3}Al_{0.3}Ti_{1.695}Nb_{0.005}(PO_4)_{2.9995}(PS_4)_{0.0005}$.

## Example 18

A method for preparing a sulfur-modified NASICON-type solid-state electrolyte includes steps as follows.

In step 1-1, compounds $Li_3PO_4$, $AlPO_4$, $GeO_2$, $TiO_2$, $NH_4H_2PO_4$, and $H_3BO_3$ were weighed based on the stoichiometric ratio of the NASICON-type solid-state electrolyte, mixed with a certain amount of pure water, and then mixed and crushed in a ball milling device to obtain a mixed slurry A with a solid content of *50%*. *50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B.

In step 1-5, the solid-state electrolyte obtained in step 1-4 was dispersed in a solvent of n-heptane and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.02) and dried in an oven under nitrogen protection at a drying temperature of 450°C. The powder obtained through drying was further dissociated by a jet mill to obtain a NASICON-type solid-state electrolyte with chemical composition of $Li_{1.3}Al_{0.291}T1_{1.685}Ge_{0.015}B_{0.009}(PO_4)_{2.9992}(PS_4)_{0.0008}$.

## Example 19

A method for preparing a sulfur-modified NASICON-type solid-state electrolyte includes steps as follows.

In step 1-1, compounds $Li_3PO_4$, $Al_2O_3$, $La_2O_3$, $TiO_2$, $NH_4H_2PO_4$, and $WO_3$ were weighed based on the stoichiometric ratio of the NASICON-type solid-state electrolyte, mixed with a certain amount of pure water, and then mixed and crushed in a ball milling device to obtain a mixed slurry A with a solid content of *50%*. *50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B.

In step 1-5, the solid-state electrolyte obtained in step 1-4 was dispersed in a solvent of dimethyl ether and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.01) and dried in an oven under nitrogen protection at a drying temperature of 450°C. The powder obtained through drying was further dissociated by a jet mill to obtain a sulfur-modified NASICON-type solid-state electrolyte with chemical composition of $Li_{1.3}Al_{0.2995}La_{0.0005}Ti_{1.694}W_{0.006}(PO_4)_{2.9995}(PS_4)_{0.0005}$.

## Example 20

A method for preparing a sulfur-modified NASICON-type solid-state electrolyte includes steps as follows.

In step 1-1, compounds $Li_2CO_3$, $Al_2O_3$, MgO, $TiO_2$, $NH_4H_2PO_4$, and $SiO_2$ were weighed based on the stoichiometric ratio of the NASICON-type solid-state electrolyte, mixed with a certain amount of pure water, and then mixed and crushed in a ball milling device to obtain a mixed slurry A with a solid content of *50%. 50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B.

In step 1-5, the solid-state electrolyte obtained in step 1-4 was dispersed in a solvent of toluene and sand-milled in a sand mill at 2000 rpm for 2 hours, to obtain a nanoscale slurry with a solid content of 55%. Subsequently, the slurry was mixed with $Li_2S$ (the solid-state electrolyte and $Li_2S$ were mixed at a mass ratio of 1:0.02) and dried in an oven under nitrogen protection at a drying temperature of 450°C. The powder obtained through drying was further dissociated by a jet mill to obtain a sulfur-modified NASICON-type solid-state electrolyte with chemical composition of $Li_{1.3}Mg_{0.02}Al_{0.28}Ti_{1.65}Si_{0.05}(PO_4)_{2.999}(PS_4)_{0.001}$.

## Example 21

A method for preparing the NASICON-type solid-state electrolyte includes steps as follows.

In step 1-1, compounds $Li_2CO_3$, $Al_2O_3$, ZnO, $TiO_2$, and $NH_4H_2PO_4$ were weighed based on the stoichiometric ratio of the NASICON-type solid-state electrolyte, mixed with a certain amount of pure water, and then mixed and crushed in a ball milling device to obtain a mixed slurry A with a solid content of 50%.

In step 1-2, the mixed slurry A was poured into a sagger container, pre-sintered at 500°C in a muffle furnace for 2 hours, and the sintered product was crushed in a blender for 5 minutes to obtain a powdery solid-state electrolyte precursor.

In step 1-3, the powdery solid-state electrolyte precursor obtained in step 1-3 was pre-sintered at 750°C in a muffle furnace for 6 hours, and the sintered product was crushed in a jet mill to obtain a powdery, micron-scale solid-state electrolyte.

In step 1-4, the solid-state electrolyte obtained in step 1-3 was dispersed in a solvent of n-heptane and sand-milled in a sand mill at 2000 rpm for 2 hours, to obtain a nanoscale slurry with a solid content of 50%. Subsequently, the slurry was mixed with $P_2S_5$ (the solid-state electrolyte and $P_2S_5$ were mixed at a ratio of 1:0.01) and dried under nitrogen protection at a drying temperature of 300°C. The powder obtained by the heat treatment was further dissociated by a jet mill to obtain a NASICON-type solid-state electrolyte with chemical composition of $Li_{1.3}Zn_{0.05}Al_{0.25}Ti_{1.7}(PO_4)_{2.999}(PS_4)_{0.01}$.

## Comparative Example 1

Differences from Example 1 are as follows. Raw materials used in step 1-1 were $Li_2CO_3$, $Al_2O_3$, $TiO_2$, and $NH_4H_2PO_4$. In step 1-5, the solid-state electrolyte obtained in step 1-4 and solvent water were sand-milled in a sand mill at 2000 rpm for 2 hours, to obtain a nanoscale slurry with a solid content of 50%. The slurry was subjected to spray-drying treatment at a drying temperature of 120°C.

## Comparative Example 2

Differences from Example 1 are as follows. Raw materials used in step 1-1 were $Li_2CO_3$, $Al_2O_3$, ZnO, $TiO_2$, and $NH_4H_2PO_4$. In step 1-5, the solid-state electrolyte obtained in step 1-4 and solvent water were sand-milled in a sand mill at 2000 rpm for 2 hours, to obtain a nanoscale slurry with a solid content of 50%. The slurry was subjected to spray-drying treatment at a drying temperature of 120°C.

## Comparative Example 3

Differences from Example 1 are as follows. Raw materials used in step 1-1 were compounds $Li_2CO_3$, $Al_2O_3$, ZnO, $TiO_2$, $NH_4H_2PO_4$, and excess $P_2S_5$, which were weighed based on the stoichiometric ratio of the NASICON-type solid-state electrolyte, mixed with a certain amount of pure water, and then mixed and crushed in a ball milling device to obtain a mixed slurry A with a solid content of *50%. 50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B. In step 1-5, the solid-state electrolyte obtained in step 1-4 and a solvent of n-heptane were sand-milled in a sand mill at 2000 rpm for 2 hours, to obtain a nanoscale slurry with a solid content of 50%. The slurry was dried in an oven under nitrogen protection at a drying temperature of 300°C.

## Comparative Example 4

Using only the cathode active material, a method for preparing the cathode active material is as follows.

The cathode active material $LiNi_{0.93}Co_{0.05}Mn_{0.02}O_2$ was heat-treated in an atmosphere furnace at 500°C for 6 hours, to obtain a $LiNi_{0.93}Co_{0.05}Mn_{0.02}O_2$ material that has been heat-treated.

**Comparative Example 5**

A method for preparing the NASICON-type solid-state electrolyte includes steps as follows.

In step 1-1, compounds $Li_2CO_3$, $Al_2O_3$, ZnO, $TiO_2$, and $NH_4H_2PO_4$ were weighed based on a stoichiometric ratio of a NASICON-type solid-state electrolyte M2, mixed with a certain amount of pure water, and then mixed and crushed in a ball milling device to obtain a mixed slurry A with a solid content of *50%. 50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B. Same as Example 1, a mixed slurry B was obtained. In step 1-5, same as Comparative Example 1, a NASICON-type solid-state electrolyte with chemical composition of $Li_{1.3}Zn_{0.05}Al_{0.25}Ti_{1.7}(PO_4)_3$ was obtained.

**Comparative Example 6**

A method for preparing a sulfur-modified NASICON-type solid-state electrolyte includes steps as follows.

In step 1-1, compounds $Li_2CO_3$, $Al_2O_3$, ZnO, $TiO_2$, $NH_4H_2PO_4$, and excess $P_2S_5$ were weighed based on the stoichiometric ratio of the NASICON-type solid-state electrolyte, mixed with a certain amount of n-heptane, and then mixed and crushed in a ball milling device to obtain a mixed slurry A with a solid content of *50%. 50* wt % of acrylamide (monomer), $(NH_4)_2S_2O_8$ (initiator), and TEMED (catalyst) were added to the mixed slurry A and the mixture thereof was dispersed uniformly in a stirring device to obtain a mixed slurry B.

In step 1-2, the mixed slurry B was poured into a sagger container, dried in a vacuum oven at 100°C, and the polymerization reaction of substances in the mixed slurry B was initiated. After 12 hours, a bulk solid-state electrolyte precursor was obtained.

In step 1-3, the solid-state electrolyte precursor obtained in step 1-2 was pre-sintered at 500°C in a tube furnace under nitrogen protection for 2 hours, and the sintered product was crushed in a blender for 5 minutes to obtain a powdery solid-state electrolyte precursor.

In step 1-4, the solid-state electrolyte precursor obtained in step 1-3 was sintered at 750°C in a tube furnace for 6 hours, and the sintered product was crushed in a jet mill to obtain a powdery, micron-scale solid-state electrolyte.

In step 1-5, the solid-state electrolyte obtained in step 1-4 and a solvent of n-heptane were sand-milled in a sand mill at 2000 rpm for 2 hours, to obtain a nanoscale slurry with a solid content of 50%. The slurry was dried under nitrogen protection at a drying temperature of 300°C. The powder obtained through drying was further dissociated by a jet mill to obtain a NASICON-type solid-state electrolyte with chemical composition of $Li_{1.3}Zn_{0.05}Al_{0.25}Ti_{1.7}(PO_4)_{2.99992}(PS_4)_{0.00008}$.

Since the sulfur in this preparation method is introduced as a sulfur source in step 1-1, all subsequent sintering steps need to be carried out under inert atmosphere protection, and non-polar solvents are required in both the sintering step and the slurry preparation step. As a result, the process is complex, a yield is low, and a content of introduced sulfur is low.

To be specific, steps for preparing the cathode active material by using the above-described solid-state electrolyte are as follows.

In step 2-1, NASICON-type solid-state electrolyte powder obtained in step 1-5 and a cathode active material matrix $LiNi_{0.93}Co_{0.05}Mn_{0.02}O_2$ were weighed at a mass ratio of 0.8:100, and put together into a high-speed mixer and mixed uniformly, to obtain a mixture of the NASICON-type solid-state electrolyte powder and the cathode active material matrix $LiNi_{0.93}Co_{0.05}Mn_{0.02}O_2$.

In step 2-2, the mixture obtained in step 2-1 was heat-treated in an atmosphere furnace at 500°C for 6 hours, to obtain a cathode active material coated with the NASICON-type solid-state electrolyte.

XRD tests, EIS tests, DC tests, pH tests, and particle size tests were respectively performed on the NASICON-type solid-state electrolytes of the above-described Examples and Comparative Examples. The peak positions and full width at half maximum (FWHM) of the four strong characteristic peaks (113), (104), (024) and (012) were read and calculated. Results are shown in Table 1-1. Results of grain size, lattice distortion rate, crystallinity of material, and lattice constants $a$, $b$, $c$, $\alpha$, $\beta$ and $\gamma$ are shown in Table 1-2. Chemical formulas, ionic conductivity, electronic conductivity, pH values, and particle size distribution of the NASICON-type solid-state electrolytes are shown in Table 2.

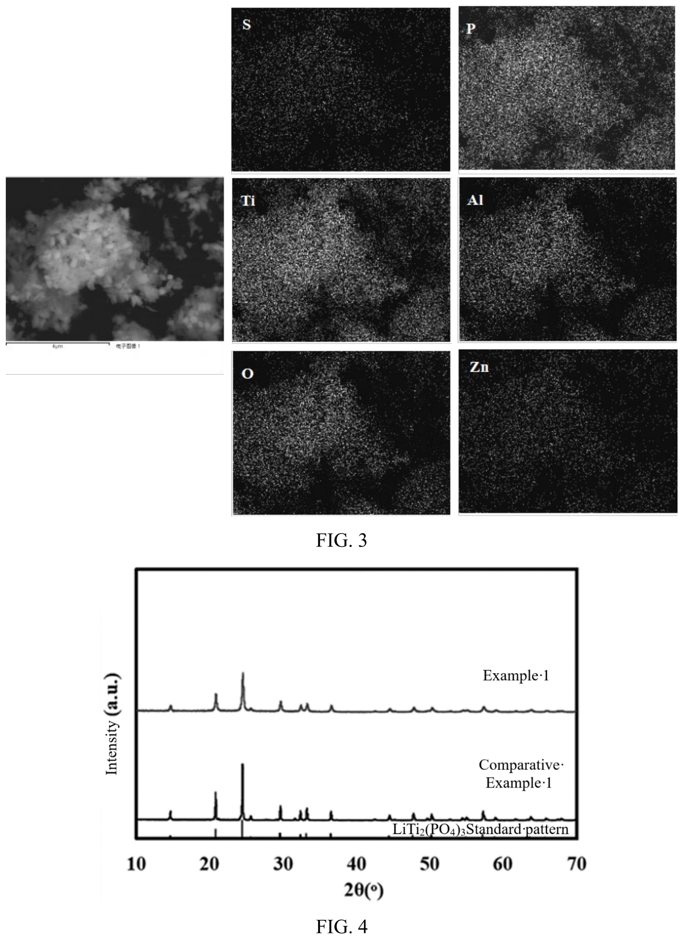

As illustrated in FIG. 3, signal responses of elements Al, Ti, P, O, S and Zn can be observed in EDS test mapping images of NASICON-type solid-state electrolyte phase prepared in Example 1.

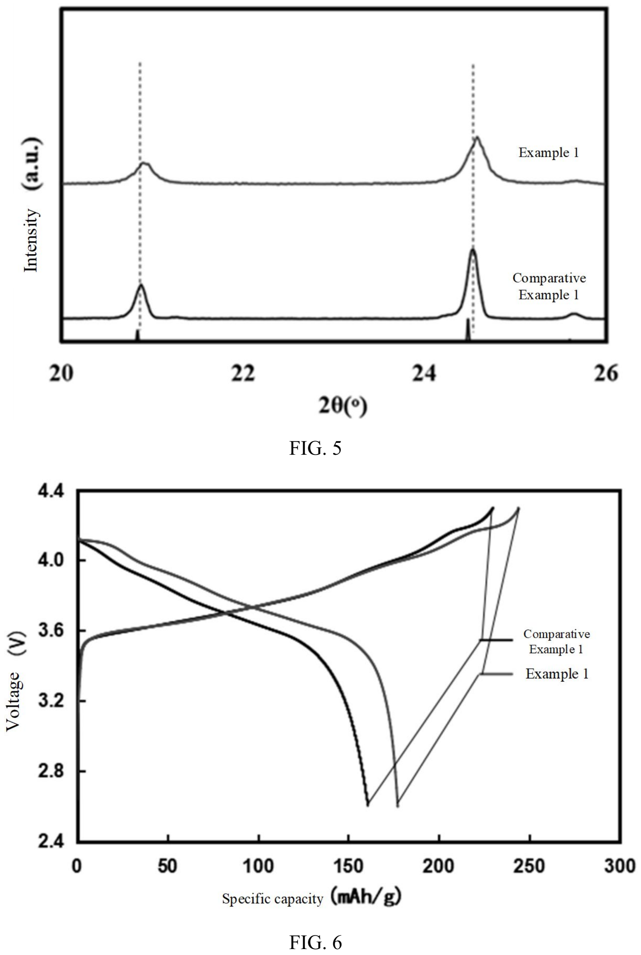

FIG. 4 and FIG. 5 are XRD patterns of Example 1 and Comparative Example 1, respectively. As can be seen from FIG. 4 and FIG. 5, compared with a NASICON-type solid-state electrolyte M1 in Comparative Example 1, a NASICON-type solid-state electrolyte S1 prepared in Example 1 exhibits significant large-angle shifts of the peak positions and an increase in the full width at half maximum (FWHM) in the XRD pattern.

As illustrated in FIG. 6, a battery of Example 1 exhibits a higher first-cycle discharge capacity and first Coulombic efficiency compared with that of in Comparative Example 1.

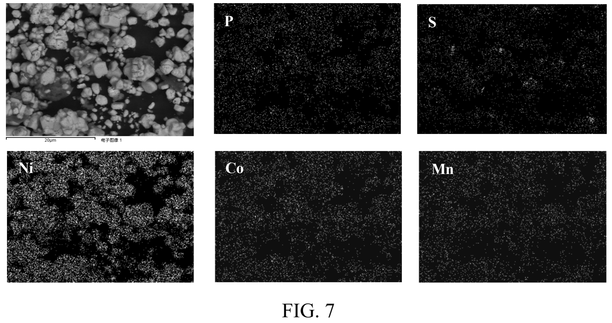

As illustrated in FIG. 7, signal responses of elements P, S, Ni, Co, and Mn can be observed in EDS test mapping images of the cathode active material prepared in Example 3, which indicates that the NASICON-type solid-state electrolyte is uniformly coated on the surface of the cathode active material.

Table 1-1

| Number | Characteristic peak (113) | | Characteristic peak (104) | | Characteristic peak (024) | | Characteristic peak (012) | |
|---|---|---|---|---|---|---|---|---|
| | Peak position/° | Full width at half maximum FWHM/ ° | Peak position/° | Full width at half maximum FWHM/ ° | Peak position /° | Full width at half maximum FWHM/ ° | Peak position /° | Full width at half maximum FWHM/ ° |
| Example 1 | 24.556 | 0.235 | 20.902 | 0.256 | 29.740 | 0.254 | 14.741 | 0.250 |
| Example 2 | 24.578 | 0.248 | 20.925 | 0.261 | 29.755 | 0.272 | 14.740 | 0.262 |
| Example 3 | 24.599 | 0.265 | 20.944 | 0.264 | 29.761 | 0.289 | 14.761 | 0.295 |
| Example 4 | 24.576 | 0.255 | 20.950 | 0.255 | 29.755 | 0.259 | 14.721 | 0.268 |
| Example 5 | 24.588 | 0.250 | 20.945 | 0.268 | 29.760 | 0.268 | 14.760 | 0.275 |
| Example 6 | 24.578 | 0.221 | 20.940 | 0.249 | 29.748 | 0.295 | 14.744 | 0.290 |
| Example 7 | 24.575 | 0.249 | 20.933 | 0.221 | 29.751 | 0.277 | 14.721 | 0.245 |
| Example 8 | 24.502 | 0.215 | 20.895 | 0.208 | 29.721 | 0.211 | 14.705 | 0.220 |
| Example 9 | 24.491 | 0.195 | 20.850 | 0.201 | 29.640 | 0.180 | 14.681 | 0.165 |
| Example 10 | 24.529 | 0.247 | 20.990 | 0.276 | 29.798 | 0.298 | 14.852 | 0.299 |
| Example 11 | 24.625 | 0.264 | 21.015 | 0.281 | 29.874 | 0.303 | 14.921 | 0.302 |
| Example 12 | 24.751 | 0.276 | 21.083 | 0.295 | 29.980 | 0.314 | 14.954 | 0.316 |
| Example 13 | 24.880 | 0.290 | 21.110 | 0.300 | 30.009 | 0.320 | 14.990 | 0.315 |
| Example 14 | 24.556 | 0.235 | 20.902 | 0.256 | 29.740 | 0.254 | 14.741 | 0.250 |
| Example 15 | 24.578 | 0.248 | 20.925 | 0.261 | 29.755 | 0.272 | 14.740 | 0.262 |
| Comparative Example 1 | 24.478 | 0.160 | 20.841 | 0.158 | 29.565 | 0.175 | 14.621 | 0.155 |
| Comparative Example 2 | 24.355 | 0.155 | 20.821 | 0.155 | 29.541 | 0.168 | 14.641 | 0.148 |
| Comparative Example 3 | 24.477 | 0.159 | 20.841 | 0.145 | 29.521 | 0.165 | 14.601 | 0.160 |
| Comparative Example 4 | / | / | / | / | / | / | / | / |

As can be seen from Table 1-1, sulfur and other metal elements were introduced into the NASICON-type solid-state electrolytes in Example 1 to Example 15. No other elements except lithium, aluminum, titanium, phosphorus, and oxygen were introduced in Comparative Example 1. Only S was not introduced in Comparative Example 2. In Comparative Example 3, sulfur was introduced as a sulfur source in step 1-1 during the preparation of the NASICON-type solid-state electrolyte. The cathode active material of Comparative Example 4 was not coated with the NASICON-type solid-state electrolyte. As can be seen from Table 1, compared with Comparative Example 1 to Comparative Example 3, the peak positions of (113), (104), (024), and (012) in the XRD pattern of Example 1 to Example 8 all exhibit large-angle shifts, and the full width at half maximum (FWHM) all increased. The four strong characteristic peaks of the NASICON-type solid-state electrolytes in Example 1 to Example 18 are (113), (104), (024), and (012), with the peak positions no lower than 24.490°, 20.850°, 29.640°, and 14.680°, respectively, and the corresponding full width at half maximum (FWHM) are greater than 0.165°, 0.160°, 0.180°, and 0.165°, respectively. It is indicated that lattice collapse occurs in the sulfur-modified NASICON-type solid-state electrolyte.

Table 1-2

| Number | Grain size/Å | Lattice distortion rate /% | Degree of crystallinity /% | Lattice constant | | | | | |
|---|---|---|---|---|---|---|---|---|---|
| | | | | $a$/Å | $b$/Å | $c$/Å | $\alpha$/° | $\beta$/° | $\gamma$/° |
| Example 1 | 591 | 0.25 | 98.56 | 8.497 | 8.497 | 20.821 | 90.762 | 90.762 | 120.015 |
| Example 2 | 6793 | 0.33 | 97.89 | 8.492 | 8.492 | 20.851 | 90.276 | 90.276 | 120.022 |
| Example 16 | 986 | 0.20 | 98.65 | 8.495 | 8.495 | 20.844 | 90.255 | 90.255 | 120.012 |
| Example 17 | 4963 | 0.28 | 98.45 | 8.495 | 8.495 | 20.864 | 90.222 | 90.222 | 120.015 |
| Example 18 | 876 | 0.09 | 97.32 | 8.489 | 8.489 | 20.880 | 90.243 | 90.243 | 120.018 |
| Example 19 | 4456 | 0.18 | 98.77 | 8.490 | 8.490 | 20.869 | 90.257 | 90.257 | 120.009 |
| Example 20 | 5732 | 0.11 | 98.42 | 8.495 | 8.495 | 20.877 | 90.200 | 90.200 | 120.025 |
| Example 21 | 9865 | 0.06 | 99.00 | 8.499 | 8.499 | 20.895 | 90.058 | 90.058 | 120.006 |
| Comparative Example 1 | 41695 | 0.01 | 99.97 | 8.504 | 8.504 | 20.803 | 90.004 | 90.004 | 120.003 |
| Comparative Example 4 | / | / | / | / | / | / | / | / | / |
| Comparative Example 5 | 35862 | 0.04 | 99.88 | 8.506 | 8.506 | 20.799 | 90.004 | 90.004 | 120.002 |
| Comparative Example 6 | 18964 | 0.02 | 99.65 | 8.510 | 8.510 | 20.801 | 90.001 | 90.001 | 120.000 |

As can be seen from Table 1-2, subsequent to fitting and refinement calculation, compared with Comparative Example 1, Comparative Example 5, and Comparative Example 6, for Example 1, Example 2, and Example 16 to Example 20, the grain size is less than 10000 Å; the lattice distortion rate is greater than 0.05%; the degree of crystallinity is less than 99.5%; and the lattice constants $a$ and $b$ are less than 8.500Å, the lattice constant $c$ is greater than 20.805Å, the lattice constants $\alpha$ and $\beta$ are greater than 90.005°, and the lattice constant $\gamma$ is greater than 120.005°. It is indicated that the sulfur-modified NASICON-type solid-state electrolyte exhibits a decrease in the grain size, a distortion of refinement and elongation of the lattice, and a decrease in the degree of crystallinity. This result is contrary to the result of the large-angle shifts and FWHM increase of the characteristic peaks in the XRD pattern.

Table 2

| Number | Chemical formula | Ionic conductivity $/\times 10^{-4}$ S $\cdot$ cm$^{-1}$ | Electronic conductivity $/\times 10^{-8}$ S $\cdot$ cm$^{-1}$ | pH | Particle size $D_{v50}$ / $\mu$m |
|---|---|---|---|---|---|
| Example 1 | $Li_{1.3}Zn_{0.05}Al_{0.25}Ti_{1.7}(PO_4)_{2.999}(PS_4)_{0.001}$ | 4.52 | 0.74 | 7.3 | 0.16 |
| Example 2 | $Li_{1.3}Al_{0.28}Y_{0.02}Ti_{1.7}(PO_4)_{2.997}(PS_4)_{0.003}$ | 4.43 | 0.87 | 7.4 | 0.18 |
| Example 3 | $Li_{1.2}Al_{0.3}Ti_{1.69}Zr_{0.01}(PO_4)_{2.995}(PS_4)_{0.005}$ | 4.22 | 0.77 | 7.5 | 0.18 |
| Example 4 | $Li_{1.1}Al_{0.3}Ti_{1.695}Nb_{0.005}(PO_4)_{2.9995}(PS_4)_{0.0005}$ | 4.69 | 0.68 | 7.6 | 0.17 |
| Example 5 | $Li_{1.15}Al_{0.29}Ti_{1.685}Ge_{0.015}B_{0.009}(PO_4)_{2.9992}(PS_4)_{0.0008}$ | 4.5 | 0.54 | 7.3 | 0.14 |
| Example 6 | $Li_{1.25}Al_{0.2995}La_{0.0005}Ti_{1.694}W_{0.006}(PO_4)_{2.9995}(PS_4)_{0.0005}$ | 4.38 | 0.95 | 7.4 | 0.19 |
| Example 7 | $Li_{1.35}Mg_{0.02}Al_{0.28}Ti_{1.65}Si_{0.05}(PO_4)_{2.999}(PS_4)_{0.001}$ | 4.21 | 0.89 | 7.5 | 0.15 |
| Example 8 | $Li_{1.7}Zn_{0.05}Al_{0.25}Ti_{1.7}(POa_4)_{2.999}(PS_4)_{0.001}$ | 4.05 | 0.98 | 7.3 | 0.19 |
| Example 9 | $Li_{1.3}Zn_{0.05}Al_{0.25}Tl_{1.7}((PO_4)_{2.9998}(PS_4)_{0.0002}$ | 4.01 | 1.00 | 7.5 | 0.20 |
| Example 10 | $Li_{1.3}Zn_{0.04}Al_{0.25}Ti_{1.7}((PO_4)_{2.991}(PS_4)_{0.009}$ | 6.23 | 0.44 | 7.6 | 0.17 |
| Example 11 | $Li_{1.3}Zn_{0.05}Al_{0.25}Ti_{1.7}((PO_4)_{2.902}(PS_4)_{0.098}$ | 7.28 | 0.37 | 7.3 | 0.10 |
| Example 12 | $Li_{1.3}Zn_{0.05}Al_{0.25}Ti_{1.7}(PO_4)_{2.861}(PS_4)_{0.139}$ | 9.95 | 0.23 | 7.4 | 0.14 |
| Example 13 | $Li_{1.3}Zn_{0.05}Al_{0.25}Ti_{1.7}(PO_4)_{2.702}(PS_4)_{0.298}$ | 13.01 | 0.01 | 7.5 | 0.19 |
| Example 14 | $Li_{1.3}Zn_{0.05}Al_{0.25}Ti_{1.7}(PO_4)_{2.999}(PS_4)_{0.001}$ | 2.15 | 0.98 | 7.2 | 0.05 |
| Example 15 | $Li_{1.3}Al_{0.28}Y_{0.02}Ti_{1.7}(PO_4)_{2.997}(PS_4)_{0.003}$ | 1.04 | 0.9 | 7.3 | 0.01 |
| Comparative Example 1 | $Li_{1.3}Al_{0.3}Tl_{1.7}(PO_4)_3$ | 3.25 | 1.1 | 7.1 | 0.24 |
| Comparative Example 2 | $Li_{1.2}Zn_{0.05}Al_{0.25}Ti_{1.7}(PO_4)_3$ | 2.15 | 1.25 | 7.1 | 0.28 |
| Comparative Example 3 | $Li_{1.1}Zn_{0.05}Al_{0.3}Ti_{1.7}(PO_4)_{2.99992}(PS_4)_{0.000088}$ | 1.37 | 1.89 | 6.9 | 0.67 |
| Comparative Example 4 | / | / | / | / | / |

EP 4 723 275 A1

As can be seen from Table 2, compared with Comparative Example 1 to Comparative Example 3, the NASICON-type solid-state electrolytes of Example 1 to Example 15 have higher ionic conductivity, lower electronic conductivity, higher pH value, and lower particle size Dv50. The $Dv_{50}$ of Example 1 to Example 15 are all less than 0.2 $\mu$m, with the pH value being greater than 7.2, the ionic conductivity being greater than $4.0\times10^{-4}$ S/cm, and the electronic conductivity being less than $1.0\times10^{-8}$ S/cm. It is indicated that, the sulfur-modified NASICON-type solid-state electrolyte, as a nanoscale raw material, is weakly alkaline and functions as an excellent ionic conductor and electronic insulator.

The acid-base titration was performed on the cathode active materials obtained in Example 1 to Example 8 and Comparative Example 1 to Comparative Example 4, and the pH values are shown in Table 3. The cathode active materials were assembled into the solid-state batteries, and first discharge specific capacity, first Coulombic efficiency, cycle performance, rate capability, and interface stability of the solid-state batteries were characterized, with characterization results shown in Table 3. Cycle curves of the solid-state batteries of Example 1 and Comparative Example 1 are shown in FIG. 6.

Preparation of the solid-state battery:

A cathode active material, a polyvinylidene fluoride binder, a carbon black conductive agent, and a solid-state electrolyte sulfide $Li_6PS_5Cl$ were sufficiently dissolved in n-heptane (a mass ratio of the cathode active material, the binder, the conductive agent, and the solid-state electrolyte was 70:0.5:1.5:28) to prepare a uniformly dispersed slurry. The slurry was uniformly coated on a surface of an aluminum foil (with a load amount of 36 mg/cm$^2$) and transferred to a vacuum drying oven for complete drying. The obtained electrode plate was rolled, followed by punching, to obtain a cathode plate.

Using the lithium-indium alloy as an anode plate, 100 mg of the sulfide $Li_6PS_5Cl$ was used as the solid-state electrolyte and pressed into a plate under a pressure of 300 MPa to form a solid-state electrolyte layer. The solid-state battery was assembled by stacking the cathode plate, the solid-state electrolyte layer, and the anode plate in sequence.

All the above operations were performed in an argon-filled glove box or a laboratory with humidity controlled at a dew point of -40°C.

Test of a real-part value of total impedance before cycling:

Before cycling, electrochemical impedance spectroscopy (EIS) was performed on the assembled solid-state battery. An electrical signal frequency for the EIS test ranged from 0.01 Hz to 10,000,000 Hz, and perturbation amplitude of an alternating current voltage was 10 mV. The obtained Nyquist plot after testing was fitted using a Zview software, and the real-part value of the total impedance of the battery before cycling can be obtained. A smaller real-part value of the total impedance indicates better chemical stability at the battery interface.

Test of the first discharge specific capacity, the first-cycle Coulombic efficiency, and the cycle performance:

At 25°C, the solid-state battery was charged at a constant current of 0.1C to 3.7V to obtain first charge specific capacity $C_0$ of the solid-state battery, and discharged at the constant current of 0.1C to 2.0V to obtain first-cycle discharge specific capacity $C_1$. Subsequently, the solid-state battery was charged and discharged for 80 cycles at the constant current of 0.1C, and discharge specific capacity of an 80-th cycle is recorded as $C_{80}$. The first-cycle Coulombic efficiency of the battery=$C_1/C_0\times100\%$. Capacity retention rate of the battery after 80 cycles=$C_{80}/C_1\times100\%$.

Test method for the rate capability:

The solid-state battery was charged to 3.7 V at a constant current of 0.33 C, and then discharged to 2.0 V at the constant current of 0.33 C, to obtain first discharge specific capacity corresponding to 0.33C. The solid-state battery was charged to 3.7 V at a constant current of 0.5C, and then discharged to 2.0 V at the constant current of 0.5 C, to obtain the discharge specific capacity corresponding to 0.5 C. The solid-state battery was charged to 3.7 V at a constant current of 1 C, and then discharged to 2.0 V at the constant current of 1 C, to obtain the discharge specific capacity corresponding to 1 C. The solid-state battery was charged to 3.7 V at the constant current of 0.33 C, and then discharged to 2.0 V at the constant current of 0.33 C, to obtain second discharge specific capacity corresponding to 0.33 C.

Table 3

| Number | Characteristic titration peak of the cathode active material | | | First discharge specific capacity (mAh/g) | First-cycle Coul ombi c effici ency (%) | Capacit y retentio n rate after 80 cycles (%) | First discharge specific capacity correspo nding to 0.33C(m Ah/g) | Discharg e specific capacity correspo nding to 0.5C (mAh/g) | Discharge specific capacity corresponding to 1.0C (mAh/g) | Second discharg e specific capacity correspo nding to 0.33C (mAh/g) | Real-part value of total imped ance before cyclin g($\Omega$) |
|---|---|---|---|---|---|---|---|---|---|---|---|
| Example1 | 4.5 | 7.9 | 8.6 | 176 | 76 | 59 | 132 | 118 | 98 | 125 | 126 |
| Example2 | 4.4 | 6.1 | 8.9 | 178 | 77 | 62 | 130 | 114 | 101 | 119 | 125 |
| Example3 | 4.5 | 6.7 | 8.5 | 168 | 77 | 69 | 131 | 112 | 100 | 153 | 187 |
| Example 4 | 4.8 | 7.5 | 8.7 | 172 | 75 | 64 | 134 | 116 | 93 | 145 | 156 |
| Example 5 | 4.2 | 6.9 | 8.0 | 195 | 76 | 64 | 139 | 120 | 98 | 150 | 129 |
| Example 6 | 4.5 | 7.2 | 8.8 | 186 | 76 | 65 | 135 | 121 | 98 | 151 | 127 |
| Example 7 | 4.7 | 7.5 | 8.6 | 175 | 74 | 58 | 140 | 119 | 89 | 135 | 111 |
| Example 8 | 4.5 | 7.9 | 8.4 | 165 | 74 | 57 | 121 | 105 | 85 | 105 | 205 |
| Comparative Example 1 | 4.5 | 7.8 | 8.5 | 159 | 72 | 48 | 119 | 102 | 76 | 89 | 325 |
| Comparative Example 2 | 4.2 | 7.5 | 8.4 | 161 | 68 | 51 | 108 | 81 | 65 | 78 | 319 |
| Comparative Example 3 | 4.5 | 7.8 | 8.8 | 137 | 69 | 55 | 101 | 68 | 45 | 51 | 340 |
| Comparative Example 4 | 4.7 | / | 8.4 | 80 | 45 | 12 | 33 | 35 | 9 | 24 | 898 |

To sum up, as can be seen from Table 3, in acid-base titration treatment, the cathode active materials corresponding to Example 1 to Example 8 exhibit characteristic phosphate titration peaks at a pH value ranging from 5 to 8, which indicates that phosphate was generated at the interface between the NASICON-type solid-state electrolyte and the cathode active material matrix during coating. The first discharge specific capacity, the first-cycle Coulombic efficiency, the capacity retention rate after 80 cycles, the first discharge specific capacity corresponding to 0.33 C, the discharge specific capacity corresponding to 0.5 C, the discharge specific capacity corresponding to 1.0 C, and the second discharge specific capacity corresponding to 0.33 C of the solid-state batteries of Example 1 to Example 8 are all higher than those of Comparative Example 1 to Comparative Example 4, while the real-part value of the total impedance before cycling is lower than those of Comparative Example 1 to Comparative Example 4. It is indicated that the cathode active material of the present disclosure uses a high-nickel material as the matrix, and the coating layer including the NASICON-type solid-state electrolyte is formed on the surface of the matrix. In this way, the cathode active material exhibits good chemical stability at the interface, which can improve charge-discharge capacity and rate capability of an all-solid-state battery containing the cathode active material, reduce the interface resistance, and enhance the cycle capacity.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The schematic description of the above terms throughout this specification are not necessarily referring to the same embodiment or example. Further, the particular feature, structure, material, or characteristic may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

**Claims**

1. A NASICON-type solid-state electrolyte, comprising $Li_xM1_yM2_zM3_uM4_v(PO_4)_{w1}(PS_4)_{w2}$, wherein:

$$y+z+u+v=2;$$

$$w1+w2=3;$$

$$0<x<5;$$

$$0 \leq y \leq 0.5;$$

$$0<z \leq 1;$$

$$0<u<2;$$

$$0 \leq v \leq 3;$$

$$1 \leq w1 \leq 3;$$

$$0.0001 \leq w2 \leq 0.3;$$

M1 comprises at least one of Mg, Na, K, or Zn;
M2 comprises at least one of Al, Ga, In, Y, Sc, La, or Ce;
M3 comprises at least one of Ti, Zr, Hf, or Ge; and
M4 comprises at least one of Cr, Mo, Ca, Fe, Si, W, Nb, Sm, V, or B.

2. The NASICON-type solid-state electrolyte according to claim 1, satisfying at least one of the following conditions:

$$0.6 \leq x \leq 3.2, \text{ and preferably, } 1 \leq x \leq 2;$$

$$0 \leq y \leq 0.3, \text{ and preferably, } 0 \leq y \leq 0.1;$$

$$0.2 \leq z \leq 0.7, \text{ and preferably, } 0.2 \leq z \leq 0.4;$$

$$0.9 \leq u < 2, \text{ and preferably, } 1.4 \leq u < 2;$$

or

$$0.2 \leq v \leq 2, \text{ and preferably, } 0.5 \leq v \leq 1.$$

3. The NASICON-type solid-state electrolyte according to claim 1 or 2, wherein an XRD pattern of the NASICON-type solid-state electrolyte has a (113) characteristic peak, a (104) characteristic peak, a (024) characteristic peak, and a (012) characteristic peak; wherein:

a peak position of the (113) characteristic peak ranges from 24.49° to 26°, with a full width at half maximum ranging from 0.165° to 0.3°;
a peak position of the (104) characteristic peak ranges from 20.85° to 22°, with a full width at half maximum ranging from 0.16° to 0.3°;
a peak position of the (024) characteristic peak ranges from 29.64° to 31°, with a full width at half maximum ranging from 0.18° to 0.3°; and
a peak position of the (012) characteristic peak ranges from 14.68° to 16°, with a full width at half maximum ranging from 0.165° to 0.3°,
wherein the NASICON-type solid-state electrolyte has a grain size ranging from 100 Å to 10000 Å, a lattice distortion rate ranging from 0.05% to 0.5%, and a degree of crystallinity ranging from 95.0% to 99.5%, and wherein a lattice constant $a$ ranges from 8.300 Å to 8.500 Å; a lattice constant $b$ ranges from 8.300 Å to 8.500 Å; a lattice constant c ranges from 20.805 Å to 20.900 Å; a lattice constant $\alpha$ ranges from 90.005° to 91.05°; a lattice constant $\beta$ ranges from 90.005° to 91.05°; and a lattice constant $\gamma$ ranges from 120.005° to 120.050°.

4. The NASICON-type solid-state electrolyte according to any one of claims 1 to 3, satisfying at least one of the following conditions:

a volume average particle size $Dv_{50}$ ranges from 0.01 $\mu$m to 0.2 $\mu$m, and preferably, from 0.05 $\mu$m to 0.1 $\mu$m;
a specific surface area ranges from 30 m$^2$/g to 300 m$^2$/g;
a pH value ranges from 7.2 to 9;
an ionic conductivity ranges from $4.0 \times 10^{-4}$ S/cm to $1.0 \times 10^{-2}$ S/cm; or
an electronic conductivity ranges from $1.0 \times 10^{-10}$ S/cm to $1.0 \times 10^{-8}$ S/cm.

5. The NASICON-type solid-state electrolyte according to claim 1 or 2, wherein 0<x<2.

6. The NASICON-type solid-state electrolyte according to claim 5, wherein an XRD pattern of the NASICON-type solid-state electrolyte has a (113) characteristic peak, a (104) characteristic peak, a (024) characteristic peak, and a (012) characteristic peak, wherein:

a peak position of the (113) characteristic peak ranges from 24.490° to 24.880°, with a full width at half maximum ranging from 0.195° to 0.290°;
a peak position of the (104) characteristic peak ranges from 20.850° to 21.110°, with a full width at half maximum ranging from 0.200° to 0.300°;
a peak position of the (024) characteristic peak ranges from 29.640° to 30.010°, with a full width at half maximum ranging from 0.180° to 0.320°; and
a peak position of the (012) characteristic peak ranges from 14.680° to 15.990°, with a full width at half maximum ranging from 0.165° to 0.315°.

7. The NASICON-type solid-state electrolyte according to claim 5 or 6, satisfying at least one of the following conditions:

a volume average particle size $Dv_{50}$ ranges from 0.01 $\mu$m to 0.2 $\mu$m, and preferably, from 0.05 $\mu$m to 0.1 $\mu$m;
a pH value ranges from 7.2 to 9;
an ionic conductivity ranges from $1.0\times10^{-4}$ S/cm to $1.5\times10^{-3}$ S/cm; or
an electronic conductivity ranges from $1.0\times10^{-10}$ S/cm to $1.0\times10^{-8}$ S/cm.

8. A method for preparing the NASICON-type solid-state electrolyte according to any one of claims 1 to 7, the method comprising:

step 1: mixing and sintering a lithium-containing compound, an M1-containing compound, an M2-containing compound, an M3-containing compound, an M4-containing compound, and a phosphorus-containing compound, to obtain a solid-state electrolyte; and
step 2: dispersing the solid-state electrolyte in a second solvent and performing grinding to obtain a nanoscale slurry, adding a sulfide to the nanoscale slurry, and performing mixing and drying, to obtain the NASICON-type solid-state electrolyte.

9. The method according to claim 8, wherein the step 1 comprises:

step 1-1: mixing the lithium-containing compound, the M1-containing compound, the M2-containing compound, the M3-containing compound, the M4-containing compound, the phosphorus-containing compound, an organic monomer, a first solvent, an initiator, and a catalyst, to obtain a mixture;
step 1-2: heating the mixture to initiate a polymerization reaction, to obtain a bulk solid-state electrolyte precursor;
step 1-3: pre-sintering the bulk solid-state electrolyte precursor, followed by crushing, to obtain a powdery solid-state electrolyte precursor; and
step 1-4: sintering the powdery solid-state electrolyte precursor, followed by crushing, to obtain the solid-state electrolyte.

10. The method according to claim 9, wherein the step 1-1 satisfies at least one of the following conditions:

the organic monomer comprises at least one of acrylamide, methylene bisacrylamide, styrene, butadiene, or methyl methacrylate;
the first solvent comprises at least one of water, N-methyl-2-pyrrolidone, phthalate, diester, long-chain alcohol, or pyrrolidone;
the initiator comprises at least one of benzoyl peroxide, $(NH_4)_2S_2O_8$, or $K_2S_2O_8$; or
the catalyst comprises at least one of N,N,NN -tetramethylethylenediamine, N,N,N,N -tetramethyl-1,6-hexanediamine, N,N-diisopropylethylamine, or N-(3-aminopropyl)-N-dodecyl-1,3-propylenediamine.

11. The method according to claim 9 or 10, wherein in the step 1-2, the polymerization reaction is performed at a temperature ranging from 80°C to 200°C, and preferably, from 90°C to 150°C, and more preferably, from 96°C to 120°C.

12. The method according to any one of claims 9 to 11, wherein in the step 1-3:

the pre-sintering is performed at a temperature ranging from 300°C to 600°C, and preferably, from 350°C to 575°C, and more preferably, from 380°C to 560°C; and/or
the pre-sintering lasts for 2 hours to 6 hours, and preferably, 2 hours to 5 hours, and more preferably, 2 hours to 4 hours.

13. The method according to any one of claims 9 to 12, wherein in the step 1-4:

the sintering is performed at a temperature ranging from 650°C to 900°C, and preferably, from 700°C to 875°C, and more preferably, from 730°C to 860°C; and/or
the sintering lasts for 4 hours to 10 hours, and preferably, 5 hours to 9 hours, and more preferably, 6 hours to 8 hours.

**14.** The method according to any one of claims 8 to 13, wherein in the step 2:

a volume average particle size Dv50 of the slurry ranges from 5 nm to 500 nm, and preferably, from 10 nm to 200 nm, and more preferably, from 50 nm to 100 nm; and/or
the second solvent comprises at least one of n-heptane, toluene, or dimethyl ether.

**15.** The method according to any one of claims 8 to 14, wherein in the step 2, an addition amount of the sulfide is 0.1 wt% to 3 wt%, and preferably, 0.1 wt% to 1 wt%, of the solid-state electrolyte.

**16.** The method according to any one of claims 8 to 15, wherein in the step 2, the drying is performed at a temperature ranging from 120°C to 600°C, and preferably, from 150°C to 500°C.

**17.** A cathode active material, comprising:

a cathode active material matrix; and
a coating layer formed on at least a portion of a surface of the cathode active material matrix, wherein the coating layer comprises the NASICON-type solid-state electrolyte according to any one of claims 1 to 7 or the NASICON-type solid-state electrolyte obtained by the method according to any one of claims 8 to 16.

**18.** The cathode active material according to claim 17, wherein, based on a total amount of the cathode active material matrix, a mass fraction of the NASICON-type solid-state electrolyte ranges from 0.05% to 1%, preferably, from 0.3% to 0.9%, and more preferably, from 0.4% to 0.8%.

**19.** The cathode active material according to claim 17 or 18, wherein the cathode active material matrix comprises at least one of lithium nickel oxide, lithium cobalt oxide, lithium manganese oxide, lithium nickel manganese oxide, lithium nickel cobalt manganese oxide, lithium nickel cobalt aluminum oxide, lithium nickel cobalt manganese aluminum oxide, lithium-rich manganese-based layered oxide and derivative thereof, lithium ferrous phosphate, or lithium manganese iron phosphate.

**20.** The cathode active material according to any one of claims 17 to 19, wherein, in acid-base titration treatment, the cathode active material exhibits a phosphate characteristic titration peak at a pH value ranging from 5 to 8.

**21.** A method for preparing the cathode active material according to any one of claims 17 to 20, the method comprising:

mixing the cathode active material matrix with the NASICON-type solid-state electrolyte; and
performing heat treatment, to form the coating layer comprising the NASICON-type solid-state electrolyte on at least a portion of the surface of the cathode active material matrix,
wherein the NASICON-type solid-state electrolyte comprises the NASICON-type solid-state electrolyte according to any one of claims 1 to 7 or the NASICON-type solid-state electrolyte obtained by the method according to any one of claims 8 to 16.

**22.** The method according to claim 21, wherein:

the heat treatment is performed at a temperature ranging from 300°C to 700°C, and preferably, from 375°C to 625°C, and more preferably, from 420°C to 580°C; and/or
the heat treatment lasts for 2 hours to 10 hours, and preferably, 4 hours to 10 hours, and more preferably, 5 hours to 10 hours.

**23.** A cathode plate, comprising the cathode active material according to claims 17 to 20 or the cathode active material obtained by the method according to claim 21 or 22.

**24.** A solid-state battery, comprising the cathode plate according to claim 23.

**25.** An electrical device, comprising the solid-state battery according to claim 24.

S100

Mixing and sintering a lithium-containing compound, an M1-containing compound, an M2-containing compound, an M3-containing compound, an M4-containing compound, and a phosphorus-containing compound

S200

Dispersing the solid-state electrolyte in a second solvent and grinding the solid-state electrolyte to obtain a nanoscale slurry, adding a sulfide to the nanoscale slurry, and performing mixing and drying

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2024/122769** |

**A. CLASSIFICATION OF SUBJECT MATTER**

H01M10/0562(2010.01)i; H01M10/058(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, ISI Web of Science: 掺杂, 单质硫, 改性, 磷酸, 硫, 硫代, 硫单质, 硫化合物, 硫化物, 硫化锂, 硫源, 硫脲, 钠超离子导体, 升华, 五硫化二磷, NASICON, phosphoric, PO, sulfur, thiourea, +sulfide, "S", natrium super ionic conductor, modif+, dop+, "P"

**C. DOCUMENTS CONSIDERED TO BE RELEVANT**

| Category* | Citation of document, with indication, where appropriate, of the relevant passages | Relevant to claim No. |
|---|---|---|
| X | KIZILASLAN, A. et al. "Sulfur Doped Li1.3Al0.3Ti1.7(PO4)3 Solid Electrolytes with Enhanced Ionic Conductivity and a Reduced Activation Energy Barrier" *Physical Chemistry Chemical Physics*, Vol. 22, 02 July 2020 (2020-07-02), pages 17221-17228 <br> abstract, page 17222, section 2.1, figure 1, and table 1 | 1, 4-5, 7 |
| Y | KIZILASLAN, A. et al. "Sulfur Doped Li1.3Al0.3Ti1.7(PO4)3 Solid Electrolytes with Enhanced Ionic Conductivity and a Reduced Activation Energy Barrier" *Physical Chemistry Chemical Physics*, Vol. 22, 02 July 2020 (2020-07-02), pages 17221-17228 <br> abstract, page 17222, section 2.1, figure 1, and table 1 | 2, 8-25 |
| Y | CN 101894972 A (NINGBO UNIVERSITY) 24 November 2010 (2010-11-24) <br> description, paragraphs [0007]-[0015] | (2) |
| Y | AHMED, D. A. et al. "Sulfur-doped Li1.3Al0.3Ti1.7(PO4)3 as a Solid Electrolyte for All-solid-state Batteries: First-principles Calculations" *Electrochimica Acta*, Vol. 463, 11 July 2023 (2023-07-11), 142872 <br> page 2, right-hand column, paragraph 4, and table 1 | 8-25 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 January 2025** | **26 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/122769** |

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2023056748 A1 (BEIJING EASPRING MATERIAL TECHNOLOGY CO., LTD.) 13 April 2023 (2023-04-13) description, page 2, paragraph 4 to page 3, paragraph 11 and page 8, paragraphs 5-7 | 9-13, 17-25 |
| A | CN 116979134 A (TIANMU ENERGY ANODE MATERIAL CO., LTD.) 31 October 2023 (2023-10-31) entire document | 1-25 |
| A | JP 2020102372 A (TAIHEIYO CEMENT CORP.) 02 July 2020 (2020-07-02) entire document | 1-25 |

Form PCT/ISA/210 (second sheet) (July 2022)

## INTERNATIONAL SEARCH REPORT
### Information on patent family members

International application No.

**PCT/CN2024/122769**

| Patent document cited in search report | | | Publication date (day/month/year) | Patent family member(s) | | | Publication date (day/month/year) |
|---|---|---|---|---|---|---|---|
| CN | 101894972 | A | 24 November 2010 | CN | 101894972 | B | 23 May 2012 |
| WO | 2023056748 | A1 | 13 April 2023 | | None | | |
| CN | 116979134 | A | 31 October 2023 | CN | 116979134 | B | 05 December 2023 |
| JP | 2020102372 | A | 02 July 2020 | JP | 7179603 | B2 | 29 November 2022 |

Form PCT/ISA/210 (patent family annex) (July 2022)